# EUROPEAN PATENT APPLICATION

(11) **EP 4 524 914 A1**
(43) Date of publication of application: **19.03.2025**
(21) Application number: 24195818.0
(22) Date of filing: 22.08.2024
(51) Int. Cl.: G06V 30/416, G06V 30/10, G06V 30/12

(54) **INFORMATION PROCESSING APPARATUS, INFORMATION PROCESSING METHOD, AND PROGRAM**

(30) Priority: 31.08.2023 JP 2023141269
(71) Applicant: CANON KABUSHIKI KAISHA, Tokyo 146-8501 (JP)
(72) Inventor: ACHIWA, Ken, Tokyo (JP)
(74) Representative: WESER & Kollegen Patentanwälte PartmbB

(57) **Abstract**

Provided is an information processing apparatus including: a character recognition unit configured to perform a character recognition process on an image of a processing target document (154); a generation unit configured to generate an instruction message based on a result of the character recognition process (155), the instruction message being a message for causing a large language model to reply a first character string corresponding to a predetermined item which is included in the document (155, S316); a transmission unit configured to transmit the instruction message in order to obtain a reply to the instruction message from the large language model; and a reception unit configured to receive the reply to the instruction message from the large language model (156).

## Description

### BACKGROUND

### Field

The present disclosure relates to processing for extracting information from a document image.

### Description of the Related Art

There is a technique in which an optical character recognition (OCR) process is executed on an input document image, and item values representing character strings that correspond to items such as a date, a price, and company names are extracted from a group of character strings recognized by the OCR process.

Japanese Patent Laid-OpenNo. 2021-077332 discloses that the result of character recognition of a form image is input into a learning model for extracting character strings (values) corresponding to predetermined items (keys) to extract the character strings corresponding to the predetermined items.

Japanese Patent Laid-Open No. 2021-077332 also discloses that, in a case where an appropriate character string cannot be extracted for a predetermined item, the user checks this character string corresponding to the predetermined item and corrects it to the appropriate character string, and training data for the learning model is generated based on the corrected result. Here, such a technique requires the user to carefully check and correct item values until collection of data for retraining of the learning model for key-value extraction is completed. Accordingly, the load on the user tends to be large. Also, the technique, which involves updating the extraction rule of the learning model for key-value extraction, cannot handle misrecognized characters included in the result of the character recognition of document images. Accordingly, the user needs to carefully check and correct item values.

### SUMMARY

The present invention in its first aspect provides an information processing apparatus as specified in claims 1 to 18.

The present invention in its second aspect provides an information processing method as specified in claim 19.

The present invention in its third aspect provides program as specified in claim 20.

Further features of the present disclosure will become apparent from the following description of exemplary embodiments with reference to the attached drawings.

### BRIEF DESCRIPTION OF THE DRAWINGS

Fig. 1 is a diagram illustrating an example of a configuration of an information processing system;
Figs. 2A to 2C are diagrams illustrating an example of hardware configurations of apparatuses included in the information processing system;
Figs. 3A and 3B are diagrams of sequences by the information processing system;
Fig. 4 is a flowchart describing details of a process of generating a machine learning model;
Figs. 5A and 5B are flowcharts each describing details of a process of displaying item values to the user;
Fig. 6 is a flowchart describing details of an item value extraction process by the machine learning model;
Figs. 7A and 7B are diagrams illustrating an example of a processing target document image and a processing result;
Fig. 8 is a flowchart describing details of a process of obtaining a reply from a large language model;
Figs. 9A to 9D are diagrams for describing instruction messages;
Figs. 10A to 10C are diagrams illustrating examples of an item value confirmation screen;
Fig. 11 is a flowchart describing details of a process of displaying item values to the user;
Fig. 12 is a flowchart describing details of a process of obtaining a reply from a large language model;
Figs. 13A and 13B are diagrams illustrating an example of a processing target document image and a processing result;
Figs. 14A and 14B are diagrams for describing an instruction message;
Fig. 15 is a diagram illustrating an example of an item value confirmation screen;
Fig. 16 is a diagram of a sequence by an information processing system;
Fig. 17 is a diagram illustrating a large language model setting screen;
Fig. 18 is a diagram illustrating a character string correction option setting screen;
Fig. 19 is a flowchart describing details of a process of obtaining replies from large language models;
Figs. 20A and 20B are diagrams illustrating examples of an item value confirmation screen;
Fig. 21 is a diagram illustrating an example of a configuration of an information processing system;
Fig. 22 is a diagram of a sequence by the information processing system;
Fig. 23 is a flowchart describing details of a process of displaying item values to the user; and
Fig. 24 is a diagram for describing an instruction message.

### DESCRIPTION OF THE EMBODIMENTS

Embodiments of the technique of the present disclosure will be described below using the drawings. Note that the components described in the following embodiments are exemplary and are not intended to limit the technical scope of the present disclosure.

### <Embodiment 1>

### [Configuration of Information Processing System]

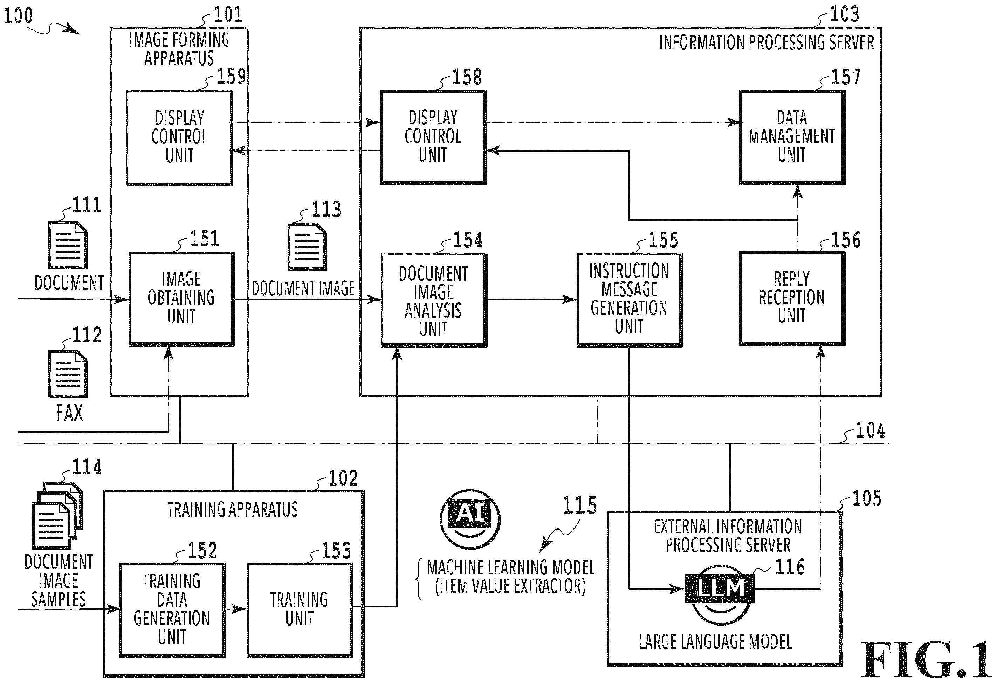

Fig. 1 is a diagram illustrating an example of a configuration of an information processing system 100 in Embodiment 1. The information processing system 100, for example, has an image forming apparatus 101, a training apparatus 102, and an information processing server 103, and an external information processing server 105, which are connected to one another through a network 104. The information processing system 100 may be configured such that the image forming apparatus 101, the training apparatus 102, and the information processing server 103 each have multiple connections to the network 104, instead of a single connection. For example, the configuration may be such that the information processing server 103 includes a first server apparatus having a high-speed computation resource and a second server apparatus having a high-volume storage, which are connected to each other through the network 104.

The image forming apparatus 101 is implemented with a multi-function peripheral (MFP) having multiple functions such as printing, scanning, and faxing, for example. The image forming apparatus 101 has at least an image obtaining unit 151 and a display control unit 159 as functional units.

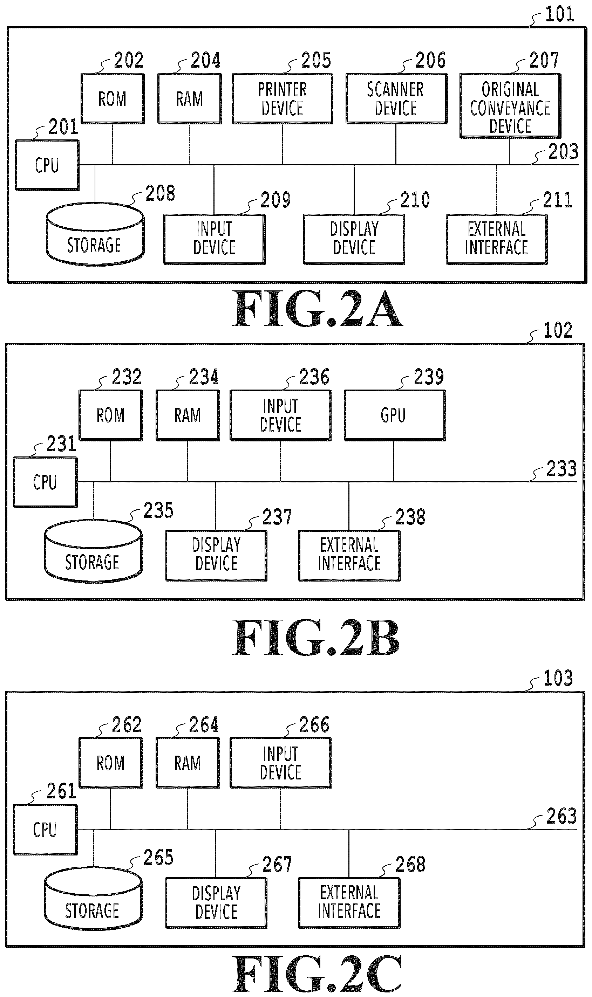

The image forming apparatus 101 has a scanner device 206 (see Fig. 2A). The scanner device 206 optically reads an original 111, or a document, being a print medium, such as paper, on which character strings are printed, and the image obtaining unit 151 performs predetermined image processing on the data thus obtained to obtain a document image 113 as a scanned image. Alternatively, the image obtaining unit 151, for example, receives fax data 112 transmitted from a fax transmitter not illustrated and performs predetermined fax image processing to obtain the document image 113. The image obtaining unit 151 transmits the obtained document image 113 to the information processing server 103.

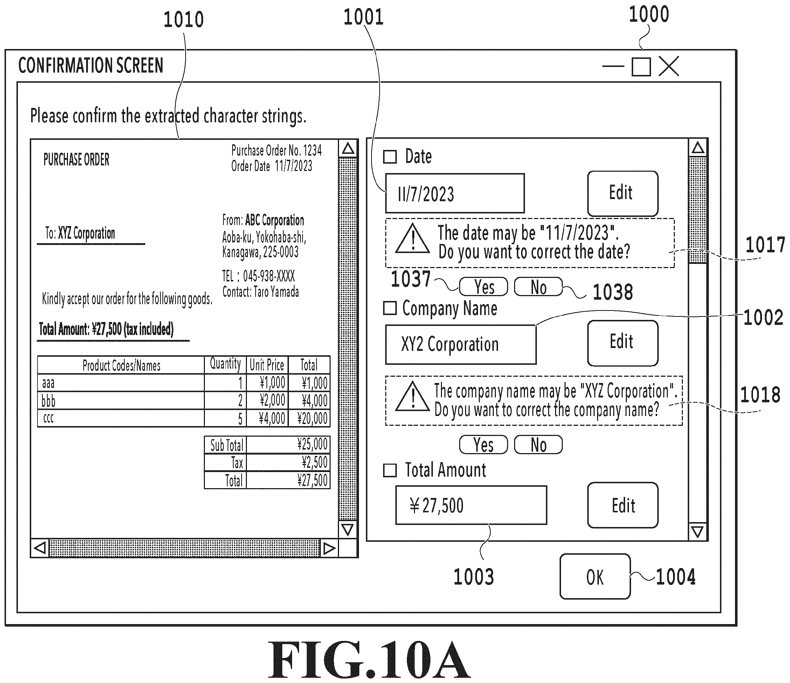

The display control unit 159 displays information received from the information processing server 103 on a display of a display device 210 (see Fig. 2A). The display control unit 159 displays an item value confirmation screen 1000 (see Figs. 10A to 10C) to be described later, for example.

The image forming apparatus 101 may be configured to be implemented with a personal computer (PC) or the like, instead of an MFP having scanning and faxing functions. For example, the document image 113 in a format such as PDF or JPEG generated using a document creation application that runs on the PC may be transmitted as a processing target to the information processing server 103.

The training apparatus 102 has a training data generation unit 152 and a training unit 153 as functional units.

The training data generation unit 152 generates training data based on multiple document image samples 114.

The training unit 153 generates a trained model (machine learning model) by training a learning model based on the training data generated by the training data generation unit 152. In the present embodiment, the training unit 153 generates an item value extractor 115 as a machine learning model that outputs information as a result indicating character strings (item values) corresponding to items which are included in a processing target document image. The training apparatus 102 transmits the generated machine learning model to the information processing server 103 through the network 104. Details of processing by the training apparatus 102 will be described later. The following description will be given on the assumption that the item value extractor 115 in the present embodiment is a trained model generated by machine learning, but it may be one that makes determinations with a rule-based algorithm and outputs results.

The information processing server 103 is an apparatus that performs processes on the processing target document image 113 input thereto and transmits the results of the processes to the image forming apparatus 101. The information processing server 103 has a document image analysis unit 154, an instruction message generation unit 155, a reply reception unit 156, a data management unit 157, and a display control unit 158 as functional units.

The document image analysis unit 154 receives the document image 113 transmitted from the image forming apparatus 101 and executes an optical character recognition (OCR) process on the document image 113 to obtain a group of character strings recognized from the document image 113. Using the item value extractor 115, the document image analysis unit 154 extracts character strings (item values) corresponding to items such as dates, company names, and a total amount among the group of character strings recognized from the document image 113. The name of an item will be referred to as "item name". Also, a character string corresponding to an item will be referred to as "item value".

The instruction message generation unit 155 generates an instruction message by inserting an item name and the like into an instruction message template prepared in advance. The instruction message generation unit 155 transmits the instruction message through the network 104 so that the instruction message will be input into the external information processing server 105. Details of the instruction message will be described later.

The reply reception unit 156 receives a reply to the instruction message output by the large language model 116.

The data management unit 157 stores and manages the reply to the instruction message generated by the large language model 116 in a storage unit. The data management unit 157 also stores and manages the item values of the document image 113 confirmed by the user through the item value confirmation screen 1000 in the storage unit.

The display control unit 158 performs control for displaying the item values extracted by the document image analysis unit 154 and the reply to the instruction message obtained from the large language model 116 to the user. The display control unit 158 generates information for displaying the later-described item value confirmation screen 1000 (see Figs. 10A to 10C) to display it on a display unit, for example. In a case where the user designates correction of the displayed item values shown the display control unit 158 accepts that correction and generates an item value confirmation screen 1000 corresponding to the user's correction.

The external information processing server 105 is an apparatus that utilizes a large language model 116. The large language model 116 is a model called LLM (Large Language Model) capable of generating sentences in an interactive manner, and generates replies to input instruction messages (prompts). For example, ChatGPT (registered trademark), Bard (filed trademark), and so on have been known as LLMs.

The large language model 116 is accessed by application programming interfaces (APIs) through the network 104. The large language model 116 outputs a reply to the instruction message input from the information processing server 103 as an output result. The external information processing server 105 may be a component present in the same vendor's another system or a component present in an external vendor's system. Note that the large language model 116 may be a component present in the information processing server 103 or a component with some of its functions and and/or devices present in the information processing server 103.

The network 104 is implemented as a local area network (LAN), a wide area network (WAN), or the like, and is a communication unit that connects the image forming apparatus 101, the training apparatus 102, the information processing server 103, and the external information processing server 105 to one another for data communication between these apparatuses.

### [Hardware Configuration of Image Forming Apparatuses]

Figs. 2A to 2C are diagrams illustrating an example of the hardware configurations of the image forming apparatus 101, the training apparatus 102, and the information processing server 103 included in the information processing system 100.

Fig. 2A is a diagram illustrating the hardware configuration of the image forming apparatus 101. As illustrated in Fig. 2A, the image forming apparatus 101 has a central processing unit (CPU) 201, a read-only memory (ROM) 202, a random-access memory (RAM) 204, a printer device 205, a scanner device 206, an original conveyance device 207, and a storage 208. The image forming apparatus 101 further has an input device 209, the display device 210 and an external interface 211. These components are connected to one another through a data bus 203.

The CPU 201 is a control unit that comprehensively controls the operation of the image forming apparatus 101. The CPU 201 boots the system of the image forming apparatus 101 by executing a boot program stored in the ROM 202, and implements functions of the image forming apparatus 101 such as printing, scanning, and faxing by executing a control program stored in the storage 208.

The ROM 202 is a storage unit implemented with a non-volatile memory, and stores the boot program that boots the image forming apparatus 101. The data bus 203 is a communication unit for performing data communication between constituent devices of the image forming apparatus 101. The RAM 204 is a storage unit implemented with a volatile memory, and is used as a work memory in a case where the CPU 201 executes the control program.

The printer device 205 is an image output device, and prints a document image on a print medium, such as paper, and outputs it. The scanner device 206 is an image input device, and optically reads a print medium such as a sheet of paper on which characters, figures, charts, and/or the like are printed. The data obtained by the reading by the scanner device 206 is obtained as a document image. The original conveyance device 207 is implemented with an auto-document feeder (ADF) or the like, and detects an original placed on platen glass and conveys the detected original to the scanner device 206 sheet by sheet. The storage 208 is a storage unit implemented with a hard disk drive (HDD) or the like, and stores the control program and the document image mentioned above.

The input device 209 is an operation unit implemented with a touch panel, hardware keys, and the like, and accepts input of operations from the user of the image forming apparatus 101. The display device 210 is a display unit implemented with a liquid crystal display or the like, and displays setting screens and the like of the image forming apparatus 101 to the user. The external interface 211 is an interface that connects the image forming apparatus 101 to the network 104, and receives fax data from a fax transmitter not illustrated and transmits document images to the information processing server 103, for example.

### [Hardware Configuration of Training Apparatus]

Fig. 2B is a diagram illustrating the hardware configuration of the training apparatus 102. As illustrated in Fig. 2B, the training apparatus 102 has a CPU 231, a ROM 232, a RAM 234, a storage 235, an input device 236, a display device 237, an external interface 238, and a graphics processing unit (GPU) 239. Each components are connected to one another through a data bus 233.

The CPU 231 is a control unit that comprehensively controls the operation of the training apparatus 102. The CPU 231 executes a boot program stored in the ROM 232 to boot the system of the training apparatus 102 and execute a training program stored in the storage 235 to generate machine learning models for extracting item values. The ROM 232 is a storage unit implemented with a non-volatile memory, and stores the boot program that boots the training apparatus 102. The data bus 233 is a communication unit for performing data communication between constituent devices of the training apparatus 102. The RAM 234 is a storage unit implemented with a volatile memory, and is used as a work memory in a case where the CPU 231 executes the training program.

The storage 235 is a storage unit implemented with an HDD or the like, and stores the training program mentioned above, and document image samples. The input device 236 is an operation unit implemented with a mouse, a keyboard, and the like, and accepts input of operations of the engineer who controls the training apparatus 102. The display device 237 is a display unit implemented with a liquid crystal display or the like, and displays setting screens and the like of the training apparatus 102 to the engineer.

The external interface 238 is an interface that connects the training apparatus 102 and the network 104 and externally receives the document image samples 114 and transmits the machine learning models to the information processing server 103. The GPU 239 is a computation unit composed of an image processing processor. The GPU 239 executes computation for generating the machine learning models based on groups of character strings included in given document images in accordance with a control command given from the CPU 231, for example.

The CPU 231 implements the functional units included in the training apparatus 102 illustrated in Fig. 1 by executing a predetermined program, but the present embodiment is not limited to this manner. Alternatively, for example, hardware such as the GPU 239, which is for speeding up computation, or a field programmable gate array (FPGA) not illustrated may be utilized. Each functional unit may be implemented by software and hardware, such as a dedicated IC, cooperating with each other, or some or all of the functions may be implemented solely with hardware.

### [Hardware Configuration of Information Processing Server]

Fig. 2C is a diagram illustrating the hardware configuration of the information processing server 103. As illustrated in Fig. 2C, the information processing server 103 has a CPU 261, a ROM 262, a RAM 264, a storage 265, an input device 266, a display device 267, and an external interface 268, which are connected to one another through a data bus 263.

The CPU 261 is a control unit that comprehensively controls the operation of the information processing server 103. The CPU 261 executes a boot program stored in the ROM 262 to boot the system of the information processing server 103 and execute an information processing program stored in the storage 265 to execute information processing such as character recognition (OCR) and information extraction.

The ROM 262 is a storage unit implemented with a non-volatile memory, and stores the boot program that boots the information processing server 103. The data bus 263 is a communication unit for performing data communication between constituent devices of the information processing server 103. The RAM 264 is a storage unit implemented with a volatile memory, and is used as a work memory in a case where the CPU 261 executes the information processing program. The storage 265 is a storage unit implemented with a HDD or the like, and stores the information processing program mentioned above, the machine learning models, document images, extracted item values, and the like.

The input device 266 is an operation unit implemented with a mouse, a keyboard, and the like, and accepts input of operations on the information processing server 103 from the user of the information processing server 103 or its engineer. The display device 267 is a display unit implemented with a liquid crystal display or the like, and displays setting screens of the information processing server 103 to the user of the information processing server 103 or its engineer.

The external interface 268 is an interface that connects the information processing server 103 and the network 104, and receives the machine learning models from the training apparatus 102 and document images from the image forming apparatus 101, for example.

The CPU 261 implements the functional units included in the information processing server 103 in Fig. 1 by executing a predetermined program, but the present embodiment is not limited to this manner. Alternatively, for example, hardware such as a GPU for speeding up computation or an FPGA may be utilized. Each functional unit may be implemented by software and hardware, such as a dedicated IC, cooperating with each other, or some or all of the functions may be implemented solely with hardware.

### [Sequence for Generating Trained Models]

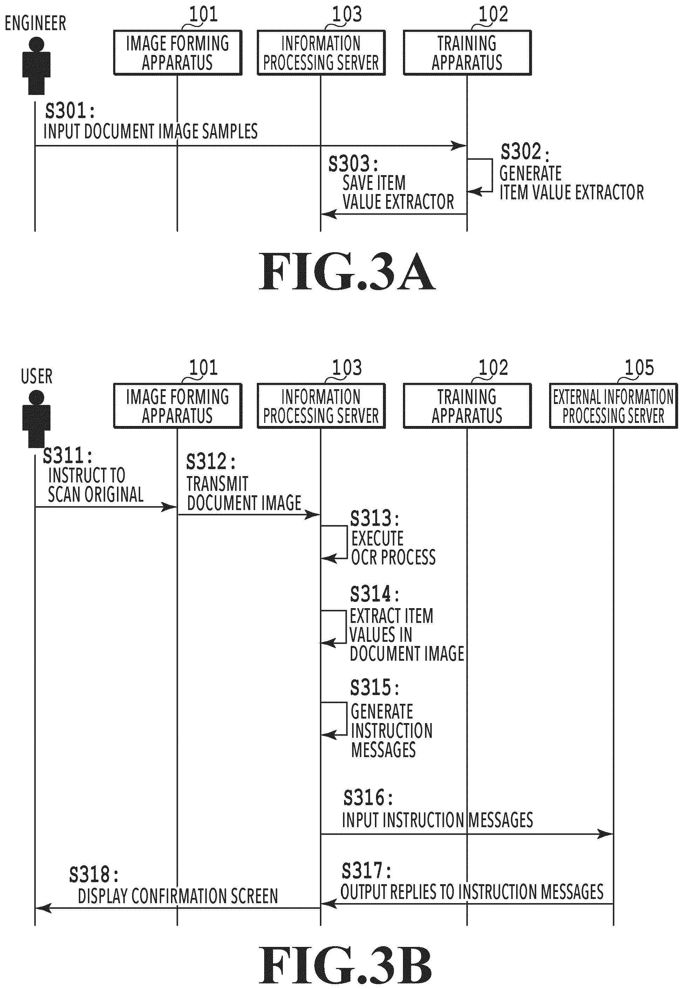

Figs. 3A and 3B are diagrams illustrating sequences by the information processing system 100. The symbol "S" in the description of each process means a step in the sequence. This applies also to the subsequent flowcharts. Also, operations by the user and the engineer are described as steps as well for the sake of description.

Fig. 3A illustrates a flow of development of the item value extractor 115, which are machine learning models, by the engineer.

In S301, the engineer of the information processing system 100 inputs the multiple document image samples 114, which are samples of images representing documents, into the training apparatus 102. The document image samples 114 are document images such as an invoice, an estimate form, an order form, and a delivery note.

In S302, the training data generation unit 152 of the training apparatus 102 generates training data based on the document image samples 114, and the training unit 153 generates the item value extractor 115, which is a machine learning model, by performing machine learning with the training data.

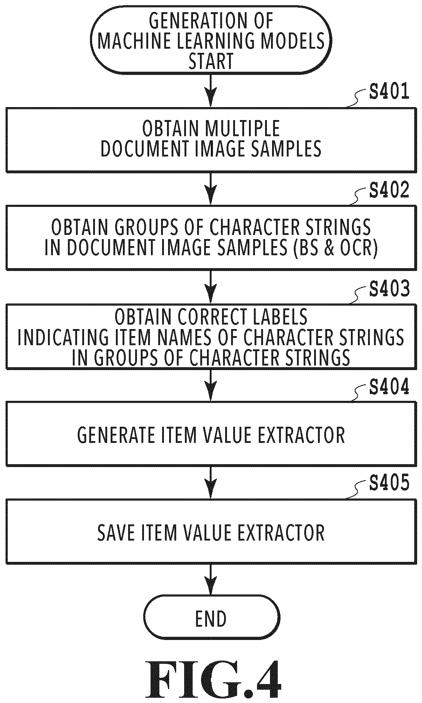

In S303, the training apparatus 102 transmits the generated item value extractor 115 to the information processing server 103. The information processing server 103 saves the item value extractor 115 in the storage 265. Details of S302 to S303 in Fig. 3A will be described later using Fig. 4.

### [Sequence of Item Value Extraction Process]

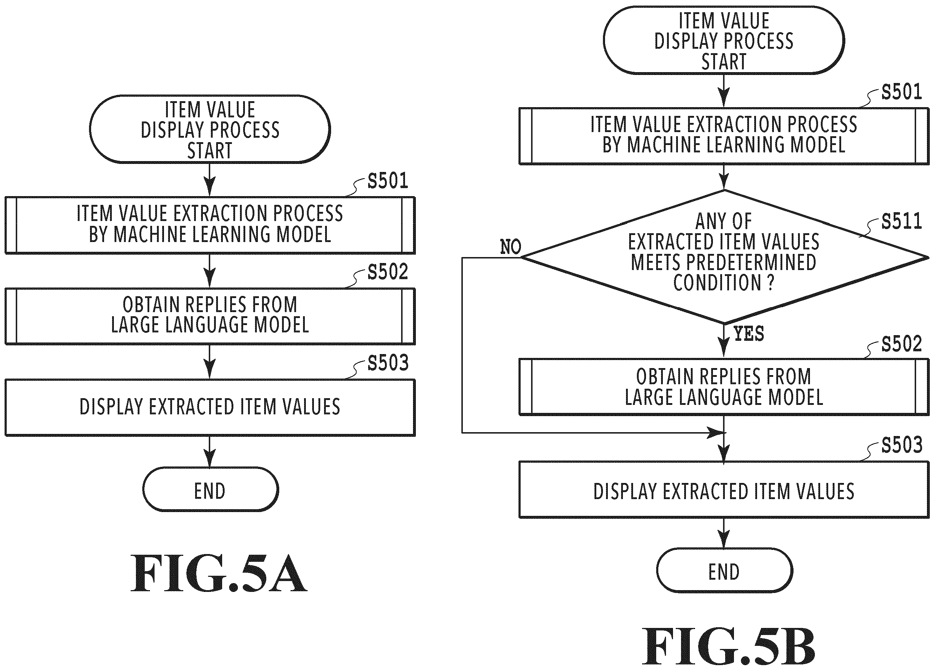

Fig. 3B is a diagram describing a flow of a process of extracting item values from a processing target document image. Details of S313 to S316 and S318 in Fig. 3B, which are processes by the information processing server 103, will be described later using Figs. 5A and 5B.

In S311, the user sets a paper document (original) on the image forming apparatus 101 and instructs the image forming apparatus 101 to scan the document.

In S312, the scanner device 206 of the image forming apparatus 101 reads the set paper document, and the image obtaining unit 151 generates a document image being an image representing the scanned document. The image obtaining unit 151 then transmits the generated document image as a processing target document image to the information processing server 103.

In S313, the document image analysis unit 154 of the information processing server 103 executes a character recognition process (OCR process) on the processing target document image transmitted in S312 and obtains a group of character strings recognized from the document image.

In S314, the document image analysis unit 154 inputs the data of the group of character strings recognized from the processing target document image into the item value extractor 115 to extract character strings corresponding to given items as item values out of the group of character strings.

In S315, the instruction message generation unit 155 generates an instruction message by using item names and the item values extracted in S314. Details of the instruction message will be described later.

In S316, the information processing server 103 transmits the instruction message generated in S315 to the external information processing server 105.

In S317, the external information processing server 105 receives the instruction message transmitted in S316, and causes the large language model 116 to generate a reply to the received instruction message. The reply to the instruction message is returned to the information processing server 103.

In S318, the display control unit 158 of the information processing server 103 converts the item value extracted in S314 based on the output result from the item value extractor 115 and the reply to the instruction message transmitted in S317 into information to be presented to the user. The display control unit 158 transmits the information obtained by the conversion to the image forming apparatus 101. The display control unit 159 of the image forming apparatus 101 displays the item value confirmation screen 1000 (see Figs. 10A to 10C) to present the processing result to the user.

### [Process of Generating Machine Learning Models]

Fig. 4 is a flowchart describing details of the process of generating the item value extractor 115 in S302 and S303 in Fig. 3A executed by the training apparatus 102. The following description will be given on the assumption that the CPU 231 of the training apparatus 102 performs the series of processes illustrated in the flowchart of Fig. 4 by loading program code stored in the ROM 232 or the storage 235 to the RAM 234 and executing it. The functions of some or all of the steps in Fig. 4 may be implemented with GPU239, or hardware such as an application-specific integrated circuit (ASIC) or an electronic circuit.

In S401, the CPU 231 obtains the multiple document image samples input by the engineer in S301 in Fig. 3A. For example, the CPU 231 obtains document image samples created by issuance source companies with their own different layouts, which are generally called semi-standardized forms, such as invoices, estimate forms, and order forms.

In S402, the CPU 231 executes a block selection (BS) process and a character recognition process (OCR process) on each document image sample obtained in S401 to obtain a group of character strings recognized from the document image sample.

The block selection (BS) process is a process of selecting block regions in a document image in such a manner as to segment the document image based on objects forming the document image, and determining each block region's attribute. Specifically, it is a process of determining attributes, such as characters, pictures, figures, and charts, and segmenting the document image into block regions with different attributes, for example. The block selection (BS) process can be implemented using a publicly known region determination technique.

The data of the group of character strings obtained as a result of the OCR process may be, for example, character strings separated on a word-by-word basis that form the document image and are arranged in the document image so as to be spaced from one another and separated by ruled lines, and that are read out continuously in a predetermined reading order based on layout information. Also, the data of the group of character strings obtained may be, for example, character strings separated on a word-by-word basis that are obtained by separating the sentences forming the document image by a morphological analysis method and read out continuously in a predetermined reading order based on layout information.

In S403, the CPU 231 obtains a correct label indicating which item corresponds to the character string to be extracted among the groups of character strings obtained in S402. The item is, for example, "date", "company name", or "total amount". The correct label may be manually given by the engineer or automatically given by inputting the document image sample into an already-generated model that extracts item values. The CPU 231 then generates training data which is a combination of the group of character strings recognized from the document image sample and data being the character strings representing item values among the group of character strings and the correct labels given to these character strings. The training data is generated for each of the multiple document samples.

In S404, the CPU 231 generates the item value extractor 115, which is a machine learning model, by machine learning using the training data. The item value extractor 115 is a trained model trained to output information of character strings (item values) corresponding to extraction target items from among a group of character strings included in a processing target document image in response to receiving data of feature amounts of that group of character strings.
The item value extractor 115 in the present embodiment is a trained model trained to be capable of outputting labels corresponding to the correct labels, for example. The item value extractor 115 is generated by training a prepared learning model to output labels of corresponding item names for extraction target character strings and output no labels for non-extraction target character strings in response to receiving the feature amounts of a group of character strings.

Incidentally, publicly known methods may be used to generate the item value extractor 115. For example, feature vectors indicating feature amounts of character strings which are converted using Word2Vec, fastText, BERT, XLNet, ALBERT, or the like, the positional coordinates at which those character strings are disposed in the document image, and so on may be used. Specifically, for example, a BERT language model that has been trained in advance with general sentences (e.g., entire articles in Wikipedia) can be used to convert a single piece of character string data into a feature vector expressed by a 768-dimensional numerical value. For the learning model, a generally known machine learning algorithm, such as a logistic regression, a decision tree, a random forest, a support vector machine, or a neural network, may be used. Specifically, based on the output value of a fully connected layer in a neural network having received a feature vector output by a BERT language model, it is possible to output one of the label of item information as estimation results, for example.

In S405, the CPU 231 transmits the generated item value extractor 115 to the information processing server 103. The item value extractor 115 is then saved in the storage 265 in the information processing server 103.

### [Item Value Display Process]

Figs. 5A and 5B are flowcharts each describing details of a process in which the information processing server 103 extracts item values from a group of character strings included in a processing target document image and displays the extracted item values to the user. Specifically, Figs. 5A and 5B are flowcharts for describing details of S313 to S318 in Fig. 3B. The CPU 261 of the information processing server 103 performs the series of processes illustrated in the flowchart of Figs. 5A and 5B by loading program code stored in the ROM 262 or the storage 265 to the RAM 264 and executing it. Alternatively, the functions of some or all of the steps in Figs. 5A and 5B may be implemented with hardware such as an ASIC or an electronic circuit. The flowchart of Fig. 5A will be described first.

In S501, using the item value extractor 115, which is a machine learning model, the CPU 261 extracts item values from a group of character strings included in the processing target document image. The process of this step will be referred to as "item value extraction process".

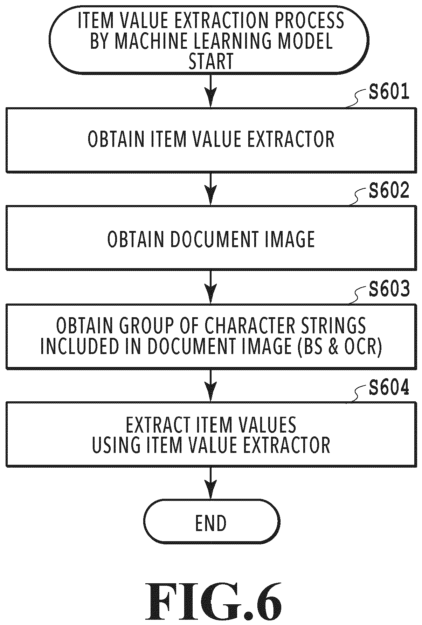

Fig. 6 is a flowchart describing details of the item value extraction process of S501.

In S601, the CPU 261 obtains the item value extractor 115, which is a machine learning model, transmitted from the training apparatus 102.

In S602, the CPU 261 obtains the document image transmitted from the image forming apparatus 101. The document image obtained in S602 is the processing target document image.

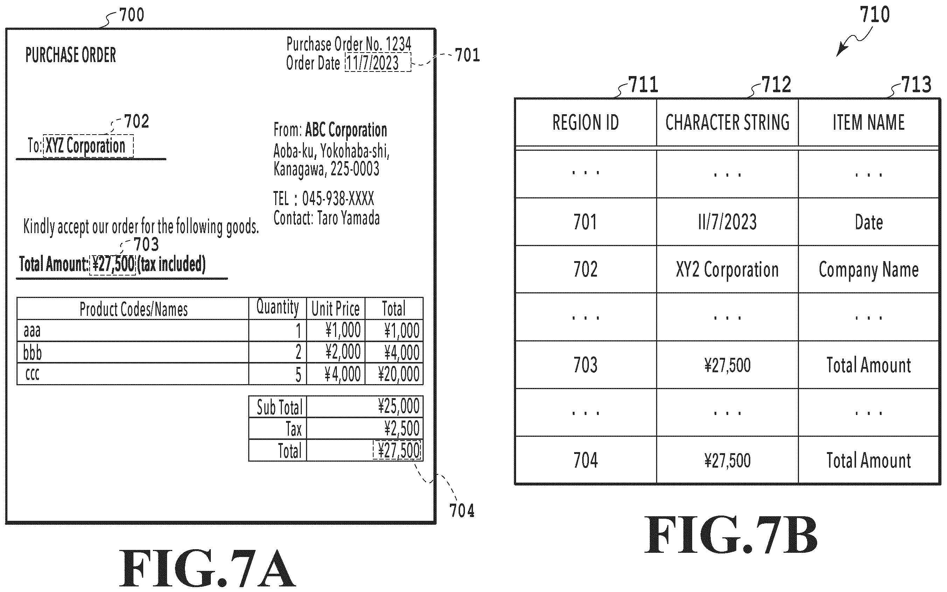

Fig. 7A is a diagram illustrating a document image 700 as an example of the processing target document image obtained in S602. The document image 700 is an example of a document image of a "purchase order".

In S603, the CPU 261 executes the block selection (BS) process and the OCR process mentioned earlier on the processing target document image to obtain a group of character strings recognized from the processing target document image.

Character string regions 701 to 704 indicated by the dotted frames in Fig. 7A represent some of the character string regions included in the document image 700. In S603, a character string recognized from each character string region in the processing target document image is obtained. Each character string region is given a region ID being a unique value for identifying the character string region.

In S604, the CPU 261 inputs the data of the group of character strings obtained in S603 into the item value extractor 115 obtained in S601. Then, based on the output result from the item value extractor 115, the CPU 261 extracts character strings (item values) corresponding to given items out of the group of character strings recognized from the processing target document image.

In the present embodiment, the following description will be given on the assumption that the extraction target items are "date", "company name", and "total amount". Note that "date" refers to the issuance date of the document, "company name" refers to the company name of the issuance destination of the document, and "total amount" refers to the total amount written in the document.

A table 710 in Fig. 7B summarizes the result of the OCR process in S603 and the result of the item value extraction in S604 in table form. A column 711 in the table 710 holds region IDs representing the character string regions in the document image. A column 712 holds the character strings obtained by the OCR process from the character string regions represented by the region IDs. A column 713 holds item names representing the items corresponding to the character strings held in the column 712. Thus, the item values corresponding to the character strings recognized by the OCR process are each associated with an item name representing the corresponding item. In Fig. 7B, among the group of character strings obtained in S603, the character strings extracted as item values are displayed.

For example, the column 712 in the table 710 holds a character string "¥27,500" in rows (records) holding "703" and "704" as region IDs in the column 711. The column 713 holds an item name "total amount" in the same records. This indicates that the character string "¥27,500" has been extracted as the item value corresponding to the item "total amount" from the document image 700.

The record holding a region ID "701" in the column 712 holds a character string "II/7/2023" obtained by the OCR process from the character string region 701 included in the document image 700. As illustrated in Fig. 7A, the actual character string written in the character string region 701 in the document image 700 is "11/7/2023". The record therefore indicates that "11/7/2023" included in the character string region 701 was misrecognized as "II/7/2023" in the OCR process in S603 and the misrecognized character string was obtained. The record indicates that "II/7/2023" was consequently extracted as the item value corresponding to the item "date" in S604 as well.

Likewise, the record holding a region ID "702" holds a character string "XY2 corporation" in the column 712. The record indicates that "XYZ corporation" included in the character string region 702 was misrecognized as "XY2 corporation" in the OCR process in S603, and therefore "XY2 corporation" was consequently extracted as the item value corresponding to the item "company name" in S604 as well.

This ends the flowchart of Fig. 6, and the process of S501 therefore ends. Then, in the flowchart of Fig. 5, the process proceeds to S502.

In S502 in Fig. 5, a process of generating an instruction message (prompt) and obtaining a reply to the instruction message from the large language model 116 is performed.

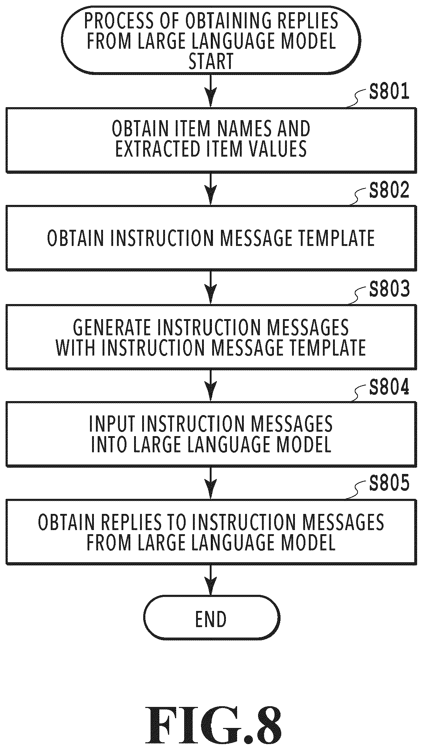

Fig. 8 is a flowchart describing details of the process of S502.

In S801, the CPU 261 obtains the item names of the extraction target items in the item value extraction process in S501 and the item values extracted in the item value extraction process in S501. In the present embodiment, the CPU 261 obtains "date", "company name", and "total amount" as the item names of the extraction target items. The CPU 261 also obtains "II/7/2023", "XY2 corporation", and "¥27,500" extracted as the item values of the items "date", "company name", and "total amount", respectively, as illustrated in the table 710.

In S802, the CPU 261 obtains an instruction message template from the storage 265. The instruction message template, which has been prepared in advance, may be a template prepared as a preset template by the engineer or the user or such a preset template to which a correction or an addition has been made by the system or the user.

In S803, the CPU 261 generates an instruction message for each item by inserting its item name and item value obtained in S801 into the instruction message template obtained in S802.

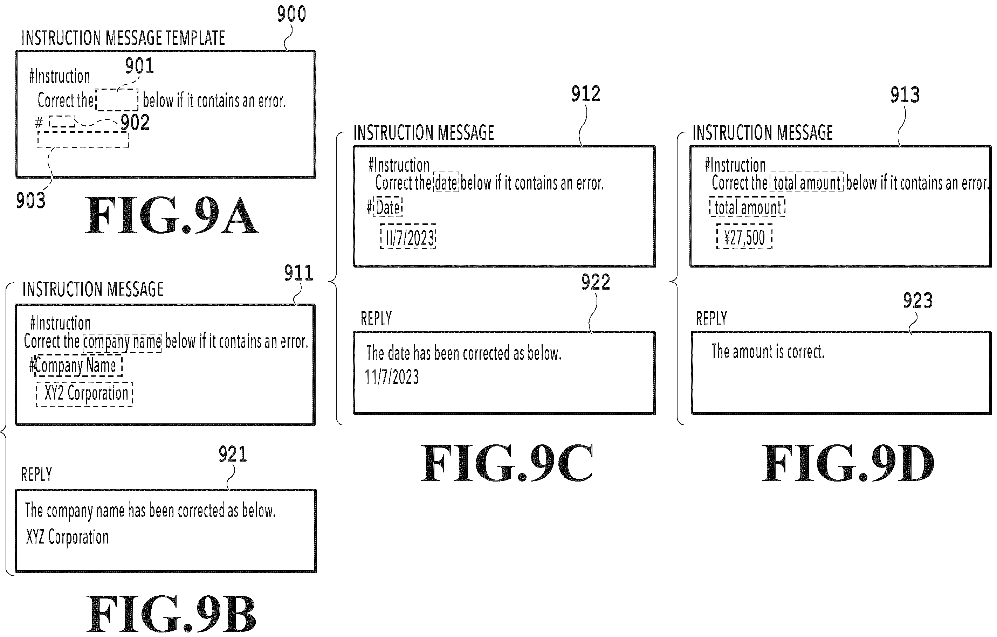

Fig. 9A is a diagram illustrating an example of the instruction message template obtained in S802. An instruction message template 900 in Fig. 9A includes item name regions 901 and 902 and an item value region 903.

In S803, the CPU 261 selects each item for which to generate an instruction message and inserts the item name indicating the name of the target item into the item name regions 901 and 902 in the instruction message template. The CPU 261 also inserts the item value corresponding to the target item among the item values obtained in S801 into the item value region 903. An instruction message is generated in this manner for each target item.

Instruction messages 911 to 913 in Figs. 9B to 9D are an example of the instruction messages generated in S803, and represent instruction messages generated in a case where the document image 700 in Fig. 7A has been obtained as the processing target document image.

Suppose that "XY2 corporation" has been extracted as the item value corresponding to the item "company name" from the document image 700 in the item value extraction process in S501. In this case, "company name" is inserted into the item name regions 901 and 902 in the instruction message template 900, and "XY2 corporation" is inserted into the item value region 903. As a result, the instruction message 911 for the item "company name" is generated as illustrated in Fig. 9B. The instruction message 912 in Fig. 9C is an instruction message for "date" generated by inserting "date" into the item name regions 901 and 902 in the instruction message template 900 and inserting "II/7/2023", which is the extracted item value of "date", into the item value region 903. The instruction message 913 in Fig. 9D is an instruction message for "total amount" generated by inserting "total amount" into the item name regions 901 and 902 in the instruction message template 900 and inserting "¥27,500", which is the extracted item value of "total amount", into the item value region 903.

Note that the content of the instruction message template may be switched for each item. In this case, in S802, an instruction message template with the item name input in the item name regions 901 and 902 in advance may be obtained. In this case, the CPU 261 only needs to insert the item value obtained in S801 into the instruction message template in S803.

Also, the CPU 261 may switch the content of the instruction message template according to the processing target document image's language or destination. Moreover, the instruction message template may be a template prepared in advance by the engineer or the user or a template prepared in advance and edited later by the user.

In S804, the CPU 261 performs a process of inputting each instruction message generated in S803 into the large language model 116. For example, the CPU 261 transmits each instruction message to the external information processing server 105 so that the instruction message will be input into the large language model 116.

In S805, the CPU 261 receives a reply to each instruction message input in S804 from the large language model 116.

In a case where any of the item values extracted in the item value extraction process in S501 contains an error, the corresponding instruction message generated in S803 includes an instruction addressed to the large language model 116 to return an item value obtained by correcting that error. In short, in a case where there is an item value with an error, the large language model 116 will return an item value obtained by correcting the error.

For example, the instruction message 911 in Fig. 9B is an instruction message which, in a case where "XY2 corporation" contains an error, the large language model 116 is caused to reply to with a character string corresponding to an item "company name" obtained by correcting the error. A reply 921 from the large language model 116 includes "XYZ corporation" obtained by correcting the error in "XY2 corporation". Likewise, a reply 922 to the instruction message 912 from the large language model 116 includes an item value obtained by correcting an error as well. The item value in the instruction message 913 for "total amount" contains no error. Thus, a reply 923 to the instruction message 913 from the large language model 116 does not include a corrected item value.

As described above, the OCR process may end up misrecognizing character strings in a document image. In this case, the misrecognized character strings will be extracted as item values in the item value extraction. Accordingly, the user needs to visually check each item value extracted in the item value extraction process as to whether the item value is correct, and correct the item value in a case where it contains an error.

Misrecognized characters tend to have similar character shapes, e.g., 0 (zero) and O (uppercase O), 1 (one), 1 (lowercase 1), and I (uppercase I), and so on. For this reason, performing visual check and correction may be difficult for the user. While the present embodiment has been described on the assumption that the number of extraction target items is three for the sake of description, the load on user will increase further if the number of items increases. To address this, in the present embodiment, the large language model 116 is caused to answer whether the item values extracted in the item value extraction process are correct, and a warning is given to the user in a case where any of the extracted item values is not appropriate. Details of the warning to the user will be described later.

Note that the instruction message template 900 in Fig. 9A is an example, and the content of the instruction in the instruction message format is not limited as long as it represents a message as an instruction to correct an error included in an item value.

This ends the flowchart of Fig. 8, and the process of S502 therefore ends. Then, the process proceeds to S503 in the flowchart of Fig. 5.

In S503, the CPU 261 performs a process of notifying the user of the item values included in the processing target document image that were extracted in the item value extraction process in S501.

Figs. 10A to 10C are diagrams each illustrating the item value confirmation screen 1000 as an example of a screen for presenting the item values extracted from the processing target document image to the user. In the present embodiment, the following description will be given on the assumption that the item value confirmation screen 1000 is displayed on the display device 210 of the image forming apparatus 101. Thus, in S503, the CPU 261 transmits information for displaying the item value confirmation screen 1000 to the image forming apparatus 101. The item value confirmation screen 1000 may be displayed on the display device 267 of the information processing server 103. A preview of the processing target document image is displayed in a preview display region 1010 in the item value confirmation screen 1000.

The item value confirmation screens 1000 in Figs. 10A to 10C each represent an example of a confirmation screen displayed in a case where the document image 700 in Fig. 7A is the processing target and information representing the table 710 has been obtained as a result of S501.

The item value confirmation screen 1000 includes item value display regions 1001 to 1003 corresponding to "date", "company name", and "total amount", which are the extraction target items in the present embodiment, respectively. The item value display region 1001 is an item value display region corresponding to the item value display region "date", in which the item value of "date" extracted by the item value extraction process in S501 is displayed by default. As illustrated in the table 710, the item value of "date" extracted by the item value extraction process is "II/7/2023". Thus, the CPU 261 performs display control so as to display "II/7/2023" in the item value display region 1001. Likewise, in the item value display region 1002 corresponding to the item "company name", the extracted item value "XY2 corporation" is displayed by default. In the item value display region 1003 corresponding to the item "total amount", the extracted item value "¥27,500" is displayed by default.

In a case where a corrected item value is obtained as the reply to an instruction message from the large language model 116 in S502, the item value written in that instruction message may contain an error. Thus, the CPU 261 notifies the user that the item value displayed in the item value display region for the corresponding item may be incorrect.

For example, the reply 922 to the instruction message 912 for the item "date" in Fig. 9C from the large language model 116 includes a corrected item value. Also, the reply 921 to the instruction message 911 for the item "company name" in Fig. 9B from the large language model 116 includes a corrected item value as well. This means that the item values corresponding to the items "date" and "company name" obtained by the item value extraction process in S501 may contain errors. For this reason, the user is notified that the item values corresponding to the items "date" and "company name" may contain errors.

For example, the CPU 261 displays alerts under the item value display regions for the items that may contain errors. An alert 1017 is an alert to notify the user that the item value of the item "date" may be incorrect. An alert 1018 is an alert to notify the user that the item value of the item "company name" may be incorrect. In the alerts 1017 and 1018, the corrected item values returned from the large language model 116 are incorporated and displayed as candidates in a case where the user corrects the item values.

By displaying the alerts 1017 and 1018 in such a manner, it is possible to notify the user that the item values displayed in the item value display regions 1001 and 1002 may contain errors. Also, it is possible to notify the user of the character strings returned from the large language model 116 as candidate corrected item values. For the item value of "total amount", which contains no error, the character string returned from the large language model 116 is not displayed.

As described above, in the item value confirmation screen 1000, the character strings obtained in the item value extraction process and the corresponding character strings returned from the large language model 116 are displayed such that the differences therebetween are noticeable. Also, different characters, such as "I" and "1" in the date, may be highlighted or displayed by boldface, for example, so that the difference can be exaggerated.

Note that in a case where an item value obtained by the item value extraction process contains an error, the large language model 116 may be caused to return multiple candidates as corrected character strings. Suppose, for example, that, the CPU 261 generates an instruction message including an instruction such as "List all of corrected character strings that are considered appropriate" as an instruction message for the item "date" in S803. Suppose also that two character strings "11/7/2023" and "2/7/2023" are obtained as candidates for the corrected item value of "date" as a reply to that instruction message from the large language model 116 in S805. In this case, the CPU 261 may perform control so as to display "11/7/2023" and "2/7/2023" in the item value confirmation screen 1000 as candidates for the item value corresponding to the item "date".

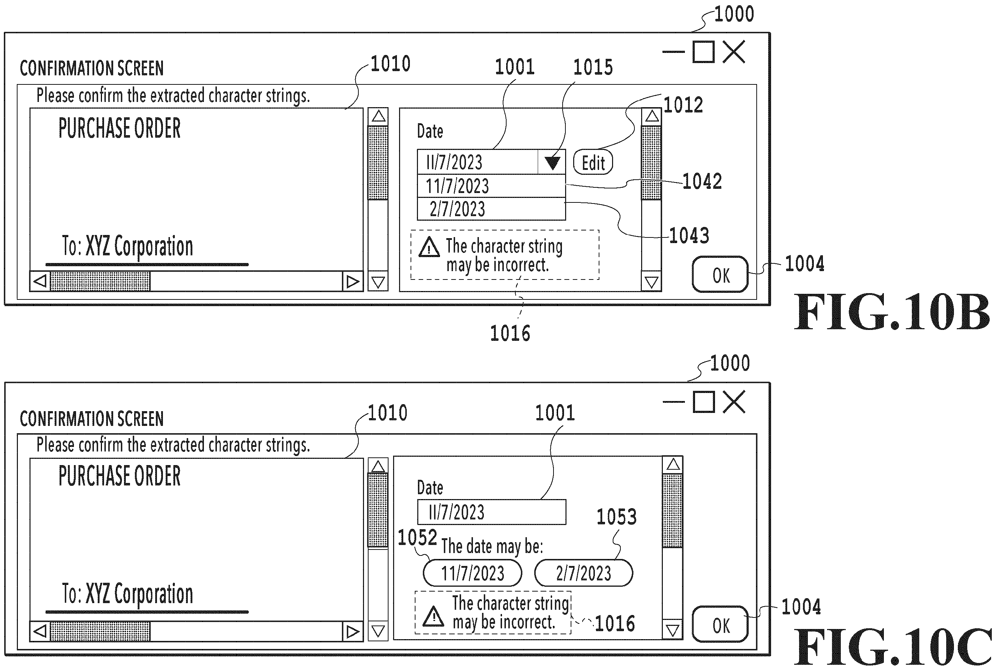

For example, as illustrated in the item value confirmation screen 1000 in Fig. 10B, the CPU 261 displays a drop-down list under the item value display region 1001 for "date". The CPU 261 displays "11/7/2023" and "2/7/2023", which are corrected item value candidates returned from the large language model 116, in cells 1042 and 1043 included in the drop-down list, respectively. Alternatively, as illustrated in Fig. 10C, buttons 1052 and 1053 corresponding to the item value candidates returned from the large language model 116 may be displayed next to each other under the item value display region 1001. In the case where multiple candidates are returned as corrected item values from the large language model 116, too, an alert 1016 indicating that the item value obtained by the item value extraction process may contain an error.

Note that S502 is a process of causing the large language model 116 to correct an error in one or more of the character strings, if any. For this reason, the process of S502 may be performed in a case where any of the item values obtained by the item value extraction process in S501 may contain an error.

Fig. 5B is the flowchart of Fig. 5A to which S511 is added after S501. In S511, the CPU 261 determines whether any of the item values extracted by the item value extraction process in S501 meets a predetermined condition. If determining that one or more of the item values meet the predetermined condition (YES in S511), the CPU 261 advances the process to S502. If, on the other hand, determining that none of the item values meets the predetermined condition (NO in S511), the CPU 261 skips S502 and advances the process to S503.

The predetermined condition is a condition indicating that the item value obtained by the item value extraction process is a character string misrecognized in the OCR process. For example, in S511, for each of the character strings of the item values extracted in S501, the CPU 261 obtains an evaluation value indicating the accuracy of the character recognition of the character string, such as plausibility, and determines that a character string meets the predetermined condition in a case where its evaluation value is less than or equal to a threshold value. Also, for example, in a case where the item value of an item such as a date or a price does not match a preset data format, the CPU 261 may determine that the item value meets the predetermined condition. Also, in a case where the item value of a company name or the like does not match a corresponding character string in a client database, the CPU 261 may determine that the item value meets the predetermined condition. Also, in a case where the character string of an item value does not have regularity in terms of the sequence of character types, such as having an alphabetical character mixed in a set of numerical characters, the CPU 261 may determine that the item value meets the predetermined condition. Note that the CPU 261 may generate an instruction message in S502 only for the item(s) corresponding to the item value(s) determined to meet the predetermined condition.

### [Correction of Item Value]

In a case where the user corrects an item value extracted from a processing target document image, the user may manually input a corrected item value. Alternatively, the user may select a corrected item value from among the item value candidates returned from the large language model 116 that are displayed in the item value confirmation screen 1000 in Fig. 10B or 10C. A method for the user to correct item values will be described using Figs. 10A to 10C. The description will be given on the assumption that the item value confirmation screen 1000 is displayed on the display device 210 of the image forming apparatus 101 and obtains the user's operations via control by the CPU 261 of the information processing server 103.

In the case where the user manually corrects an item value, the user presses an edit button 1012. In response to this, the item value display region 1001 changes to a state where the text box or the like can be edited. Using an input cursor, the user can correct the text displayed in the item value display region 1001, which indicates the item value, by manual input.

Also, in response to detecting that the user has pressed a Yes button 1037 in the item value confirmation screen 1000 in Fig. 10A, the display of the item value display region 1001 is changed to "11/7/2023" returned from the large language model 116. Moreover, "II/7/2023", which has been displayed in the item value display region 1001, is saved in a storage unit of the information processing server 103. In response to detecting that the user has pressed a No button 1038, "II/7/2023", which was previously displayed, is obtained from the storage unit of the information processing server 103, and "II/7/2023" is displayed in the item value display region 1001. Note that no operation may be performed in a case where the No button 1038 is pressed before the Yes button 1037 is pressed.

Next, methods of correcting an item value in a case where the large language model 116 has returned multiple item value candidates will be described using Figs. 10B and 10C.

In response to detecting that the user has pressed a list button 1015 in the item value confirmation screen 1000 in Fig. 10B, a drop-down list including item value candidates suggested by the large language model 116 is displayed. Suppose, for example, that the user selects the cell 1042, in which "11/7/2023" as an item value candidate is displayed. In this case, the selection of "11/7/2023" is detected, and the display of the item value display region 1001 is switched to "11/7/2023", and "II/7/2023" displayed in the item value display region 1001 is overwritten to be displayed as an item value type candidate.

The item value confirmation screen 1000 in Fig. 10C is a screen obtained by changing the drop-down list for displaying item value candidates in Fig. 10B to the buttons 1052 and 1053. With Fig. 10C, the user can browse the item value candidates suggested by the large language model 116 without having to press the list button 1015. As for the operation performed with Fig. 10C, the cells in the drop-down list in the operation with Fig. 10B are replaced with the buttons.

Thereafter, the user can press an OK button 1004 in Figs. 10A to 10C to fix the character strings displayed in the item value display regions 1001 to 1003 as the item values included in the processing target document image. The fixed item values will be managed by the data management unit 157 of the information processing server 103, for example.

As described above, in the present embodiment, in a case where character strings misrecognized in the OCR process are extracted as item values, the large language model will return appropriate item values. In accordance with the present embodiment, it is possible to suggest corrected item value candidates to the user based on the reply from the large language model. This reduces the time and effort required for the user to confirm the item values and manually input the correct item values. Also, in the present embodiment, an instruction message is generated for each extraction target item. This prevents the large language model from returning character strings not appropriate as corrected item value candidates.

Incidentally, the entire group of character strings obtained by performing the OCR process on the processing target document image may be included in an instruction message. The instruction message may be an instruction to correct an error in the item value of each item, if any, with the relationship of the character string with the preceding and following character strings taken into account.

### <Embodiment 2>

In Embodiment 1, a method of causing the large language model 116 to return corrected character strings for character strings misrecognized in the OCR process has been described. In Embodiment 2, a method of causing the large language model 116 to return an item value(s) for an item(s) erroneously extracted or not extracted in the item value extraction process will be described. In the present embodiment, its difference from Embodiment 1 will be mainly described. Features that are not particularly specified are the same components and processes as those in Embodiment 1.

### [Item Value Display Process]

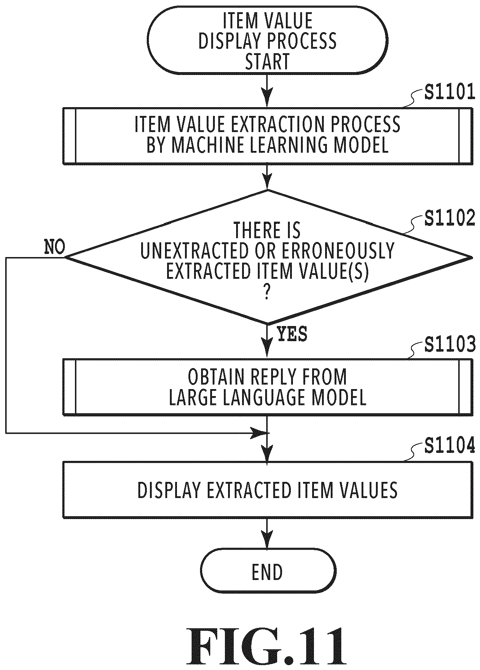

Fig. 11 is a flowchart describing a process of extracting item values from a document image and displaying them, and is a flowchart according to the present embodiment corresponding to the flowchart of Fig. 5 in Embodiment 1.

In S1101, which is an item value extraction process similar to S501, the CPU 261 extracts item values from a processing target document image based on an output result from the item value extractor 115, which is a machine learning model. In the present embodiment too, the following description will be given on the assumption that the extraction target items are "date", "company name", and "total amount". Detailed description is omitted.

In S1102, the CPU 261 determines whether or not there is an unextracted item(s) whose item value(s) could not be extracted or an item(s) whose item value(s) was(were) erroneously extracted among the extraction target items in the item value extraction process in S501. If determining there is an unextracted or erroneously extracted item(s) (YES in S1102), the CPU 261 advances the process to S1103. If determining that there is no unextracted or erroneously extracted item (NO in S1102), the CPU 261 skips S1103 and advances the process to S1104.

The method of determining erroneous extraction is as follows. For example, for an item such as a date or a price, in a case where the extracted item value does not match a preset data format, the CPU 261 determines that the item value has been erroneously detected. Also, for an item such as a company name, in a case where the extracted item value does not match a character string held in a client database that indicates the company name, the CPU 261 determines that the item value has been erroneously extracted. In S1102, the CPU 261 determines YES if there is even one unextracted or erroneously extracted item among the multiple items.

In S1103, which is a step corresponding to S502 in Fig. 5, the CPU 261 generates an instruction message and obtains a reply to the instruction message from the large language model 116.

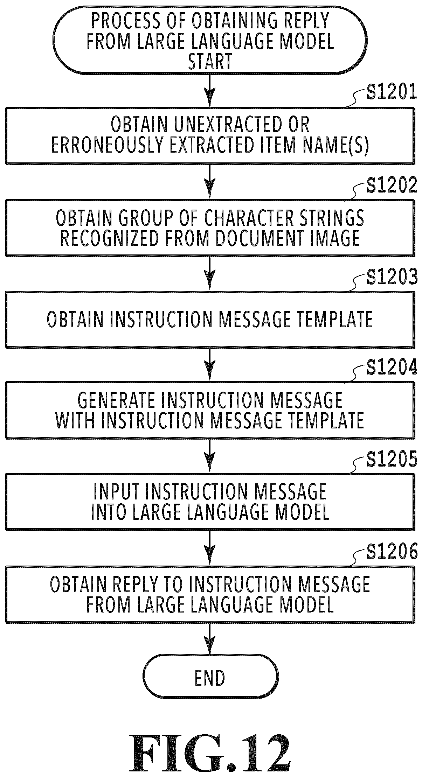

Fig. 12 is a flowchart describing details of the process ofS1103, and is a flowchart according to the present embodiment corresponding to the flowchart of Fig. 8 in Embodiment 1.

In S1201, the CPU 261 obtains the item name of the item(s) determined to have been unextracted or erroneously extracted in S1102. In the case where the item names of the extraction target items are "date", "company name", and "total amount", at least one of those item names is obtained.

In S1202, the CPU 261 obtains the group of character strings obtained from the processing target document image by the OCR process.

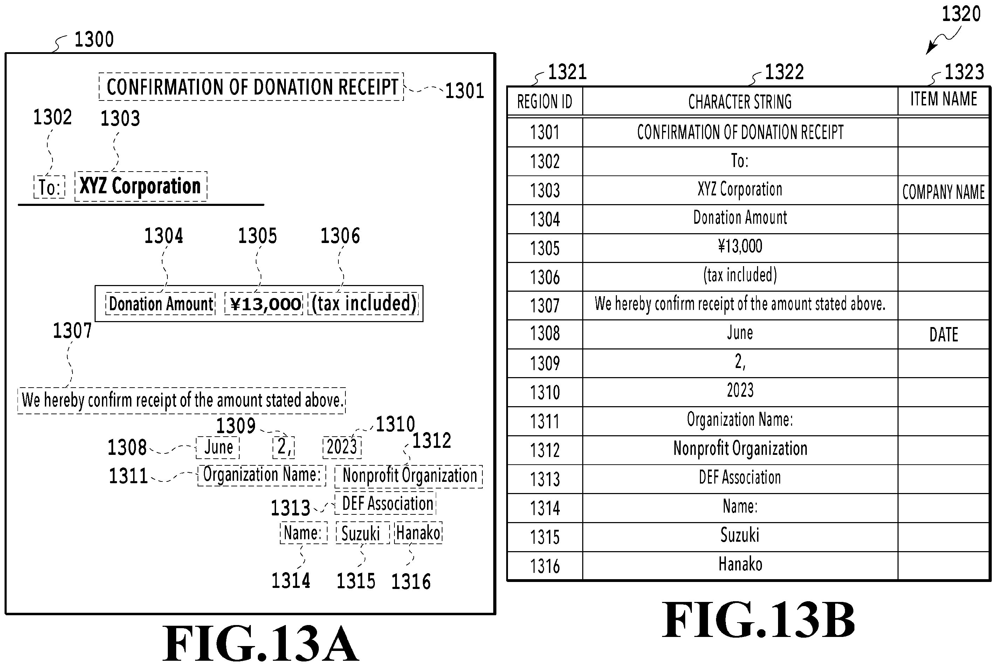

Fig. 13A is a diagram illustrating a document image 1300 as an example of the processing target image. The dotted frames represent character string regions 1301 to 1316 included in the document image 1300. Character strings recognized from the character string regions 1301 to 1316 by performing the OCR process on the document image 1300 are obtained. Each character string region is given a region ID being a unique value for identifying the character string region.

A table 1320 in Fig. 13B summarizes the result of the OCR process on the document image 1300 and the result of the item value extraction process in table form. A column 1321 in the table 1320 holds region IDs representing the character string regions in the document image 1300. A column 1322 holds the character strings obtained by the OCR process from the character string regions represented by the region IDs. A column 1323 holds item names representing the items corresponding to the character strings held in the column 1322.

The column 1323 in the table 1320 in Fig. 13B does not include an item name representing the item "total amount". It is possible, for example, that the confirmation of donation receipt as a document represented by the document image 1300 was a document which the item value extractor 115 had not learned, and the item value extractor 115 therefore could not determine that the character string written after "Donation Amount" was the total amount. Thus, the table 1320 indicates that the item value of the item "total amount" has been unextracted.

Also, the character string associated with the item name "date" is "June", indicating that "June" has been extracted as the item value of "date" in the item value extraction process. The data format of "date" is set to be a format including a month, day, and year, and the extracted item value does not match that data format. The item value of "date" indicates an item value determined to have been erroneously extracted. In the document image 1300, the character string "June" indicating the month and the character string "2" indicating the day are spaced longer than usual from each other. It is possible that the characters that were supposed to be recognized as a single character string were recognized as multiple character strings, and the item value extractor 115 failed to appropriately extract the item value of "date".

In a case where the table 1320 in Fig. 13B has been obtained as the result of the item value extraction process in S1101, then in S1201, "total amount" and "date" are obtained as item names determined to have been unextracted or erroneously extracted. In S1202, the character strings held in the column 1322 in the table 1320 are obtained as the group of character strings obtained by performing the OCR process.

In S1203, the CPU 261 obtains an instruction message template in the present embodiment from the storage 265.

In S1204, the CPU 261 generates an instruction message by inserting the item name(s) obtained in S1201 and the group of character strings obtained in S1202 into the instruction message template obtained in S1203.

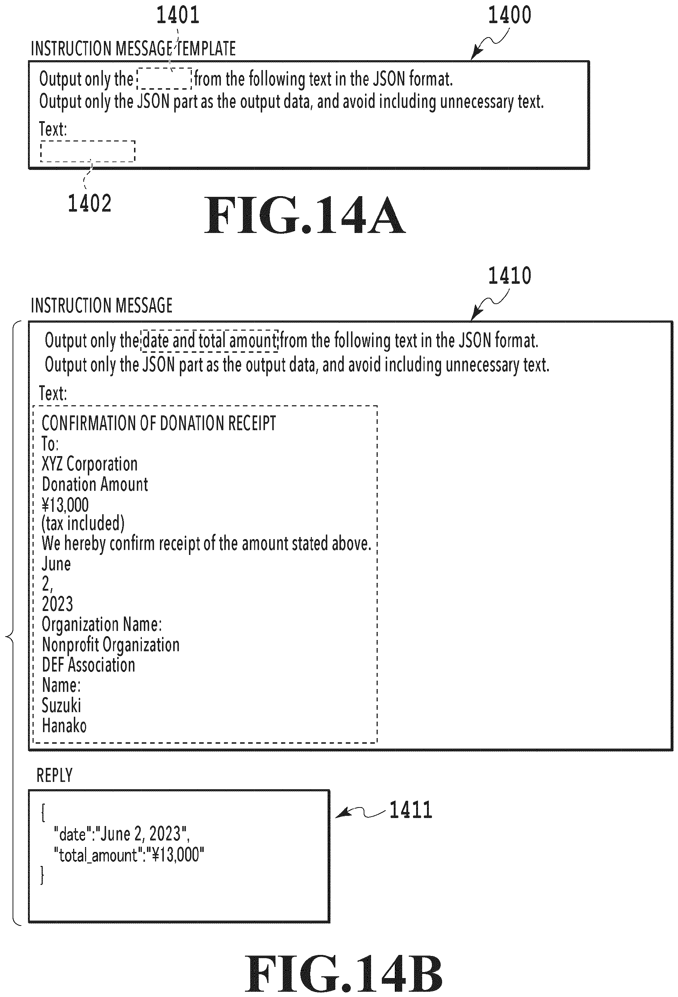

Fig. 14A is a diagram illustrating an example of the instruction message template in the present embodiment obtained in S1203. An instruction message template 1400 in Fig. 14A includes an item name region 1401 and a character string group region 1402.

In S1204, the CPU 261 inserts the item name(s) determined to have been unextracted or erroneously extracted into an item name region 1401 in the instruction message template 1400. Moreover, the CPU 261 inserts the group of character strings recognized from the document image by the OCR process into a character string group region 1402. The character strings are inserted in the order of recognition, for example. As a result, an instruction message 1410 in Fig. 14B is generated.

In S1205, the CPU 261 performs a process of inputting the instruction message generated in S1204 into the large language model 116.

In S1206, the CPU 261 receives a reply to the instruction message input in S1205 from the large language model 116.

For example, the instruction message 1410 in Fig. 14B includes an instruction to answer the item values corresponding to the items determined to have been unextracted or erroneously extracted from among the group of character strings recognized from the document image. A reply 1411 to the instruction message 1410 from the large language model 116 indicates that the large language model 116 has returned "June 2, 2023" as the character string of the item "date" and "¥13,000" as the character string of the item "total amount".

The CPU 261 generate an instruction message with its content switched according to the input document image's language or destination. Moreover, the instruction message template may be a template prepared in advance by the engineer or the user or a template prepared in advance and edited later by the user.

This ends the flowchart of Fig. 12, and the process of S1103 therefore ends. Then, the process proceeds to S1104 in the flowchart of Fig. 11.

In S1104, the CPU 261 performs a process of notifying the user of the item values included in the processing target document image that were extracted by the item value extraction process in S1101.

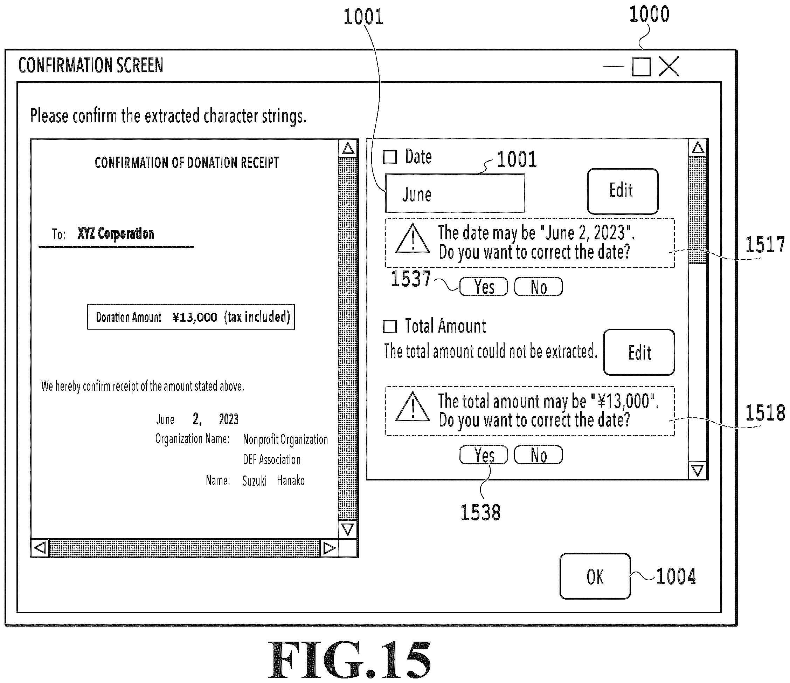

Fig. 15 is a diagram illustrating the item value confirmation screen 1000 in the present embodiment as a screen for presenting the extracted item values to the user. The layout of the item value confirmation screen 1000 in the present embodiment is similar to the item value confirmation screens 1000 in Figs. 10A to 10C. In S1104, the CPU 261 transmits information for displaying the item value confirmation screen 1000 to the image forming apparatus 101.

In the item value display region 1001 in Fig. 15, the item value of "date" extracted by the item value extraction process is displayed by default. Here, "date" is an item determined to have been erroneously extracted. Thus, an alert 1517 indicating that the item value displayed in the item value display region 1001 for "date" may be incorrect. The alert 1517 is displayed so as to incorporate the character string returned from the large language model 116 as corrected candidates. In response to detecting a Yes button 1537 being pressed, the display of the item value display region 1001 is changed to "June 2, 2023" returned from the large language model 116.

The item "total amount" is an item determined to have been unextracted, so that no item value is displayed in the item value confirmation screen 1000 in Fig. 15. Thus, for the item "total amount" too, an alert 1518 incorporating the character string returned from the large language model 116 as a corrected candidate is displayed. In response to detecting a Yes button 1538 being pressed, an item value display region is displayed, and "¥13,000" returned from the large language model 116 is displayed in the item value display region.

As described above, in the present embodiment, in a case where item values are unextracted or erroneously extracted in an item value extraction process using a trained model or the like, a large language model will return corrected item values. Thus, in accordance with the present embodiment, it is possible to suggest item value candidates to the user based on the reply from the large language model. This reduces the time and effort required for the user to confirm the item values and allows the user to avoid manually inputting the correct item values.

### <Embodiment 3>

In the above-described embodiments, methods utilizing a single large language model have been described. In Embodiment 3, a method utilizing one or more large language models set by the engineer or the user will be described. In the present embodiment, its difference from Embodiment 1 or 2will be mainly described. Features that are not particularly specified are the same components and processes as those in Embodiment 1 or 2.

### [Sequence of Item Value Extraction Process]

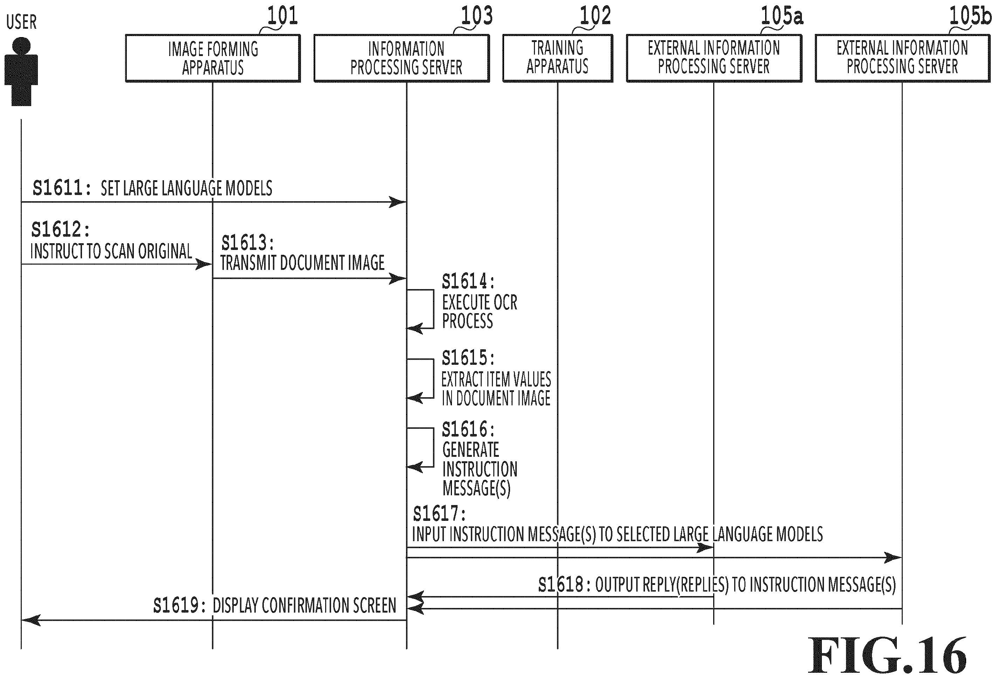

Fig. 16 is a sequence chart according to the present embodiment corresponding to the sequence in Fig. 3B. The sequence for the development of the machine learning model is similar to Fig. 3A and is therefore omitted.

In S1611, the user selects large language models as instruction message input destinations and sets the method of displaying the item value confirmation screen 1000 and the like. The information processing server 103 obtains the contents set by the user in S1611.

Note that S1612 to S1619 are similar processes to S311 to S318, and description thereof is omitted. Here, the processes of S1617 and S1618 are different from S316 and S317. In S1617, the instruction message(s) is(are) input into the large language models selected by the user in S1611. In S1618, replies to the instruction message(s) are received from the selected large language models. Also, in S1619, the item value confirmation screen 1000 is displayed based on the contents set by the user in S1611.

### [Large Language Model Setting Screen]

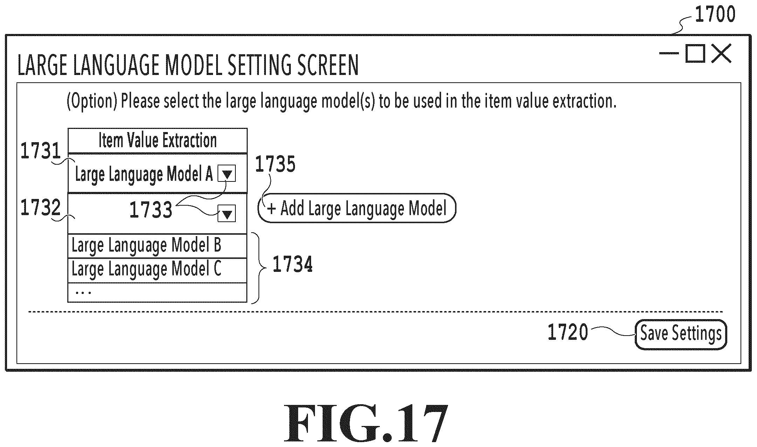

Fig. 17 is a diagram illustrating a large language model setting screen 1700 as an example of a screen for the user to select large language models in S1611. The following description will be given on the assumption that the large language model setting screen 1700 is displayed on the display device 210 of the image forming apparatus 101 via control by the CPU 261 of the information processing server 103. The CPU 261 functions also as a setting unit that sets the large language models into which to input an instruction message. In the present embodiment, an instruction message is input into each large language model selected by the user, and a reply to the instruction message is received from each large language model into which the instruction message is input.

In a model display region 1731 in the large language model setting screen 1700 in Fig. 17, a large language model selected as an instruction message input destination is displayed. Fig. 17 illustrates a state where "large language model A" displayed in the model display region 1731 is selected as an instruction message input destination. In a case of changing the large language model set as the instruction message input destination, the user presses a list button 1733 included in the model display region 1731. In response to pressing the list button 1733, a drop-down list including large language models which the user can select is displayed. In a case where the user selects a large language model from the drop-down list, the name of the selected large language model is displayed in the model display region 1731.

In a case of inputting an instruction message into multiple large language models to obtain replies from the multiple large language models, the user presses an add button 1735. As a result, a new model display region 1732 is added, as illustrated in Fig. 17. In a case where the user selects "large language model B", for example, from a drop-down list 1734 displayed by pressing a list button 1733 included in the model display region 1732, "large language model B" thus selected is displayed in the model display region 1732. Pressing the add button 1735 can similarly add a third large language model input field.

In a case where the user presses a save button 1720 in this state, "large language model A" and "large language model B" displayed in the model display regions 1731 and 1732 are set to be large language models as instruction message input destinations. Information indicating the selected large language models is transmitted to the information processing server 103.

Fig. 16 illustrates a flow in a case where the user sets multiple large language models as instruction message input destinations in S1611. An external information processing server 105a represents a server that utilizes "large language model A", and an external information processing server 105b represents a server that utilizes "large language model B". In a case where the user sets "large language model A" and "large language model B" as instruction message input destinations in S1611, the instruction message is transmitted in S1617 to each of the large language models to input the instruction message into each of them. Then, a reply is received from each of the large language models in S1618.

### [Character String Correction Option Setting Screen]

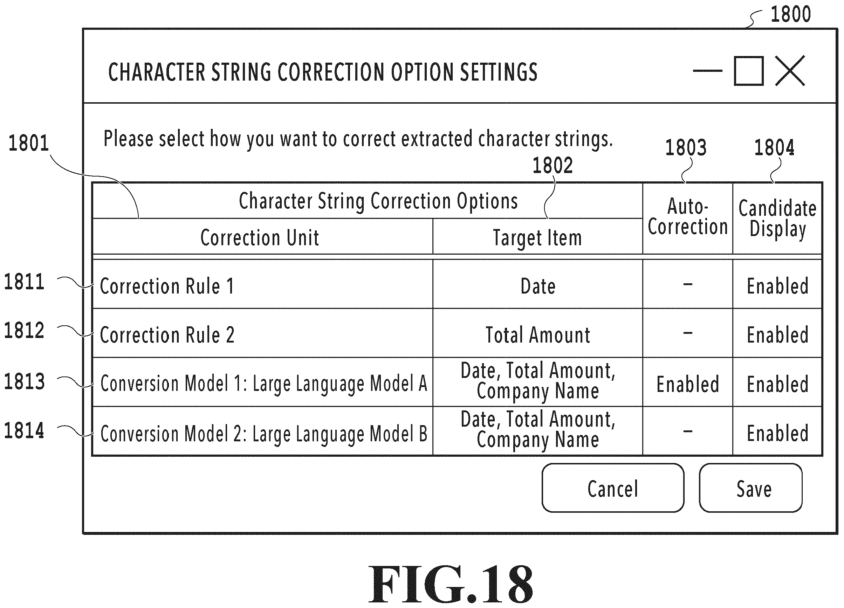

Fig. 18 is a diagram illustrating a character string correction option setting screen 1800 as a screen for the user to set how to display the item value confirmation screen 1000 in S1611.

The foregoing embodiments have been described on the assumption that character strings returned from the large language model are output and displayed as candidate character strings with which the user can correct item values. This display will be referred to as "candidate display". In the present embodiment, on the setting screen 1800, the user can set which large language model's reply to be the candidate display target among the large language models selected on the large language model setting screen 1700 for each item.

Also, in the present embodiment, each item value obtained by the item value extraction process can be automatically corrected to the corresponding character string returned from a large language model, and the character string returned from the large language model can be output as the item value. That is, a character string returned from a large language model can be displayed by default in an item value display region in the item value confirmation screen 1000. This process will be referred to as "auto-correction". Which large language model's reply to use in auto-correction can be set for each item on the setting screen 1800. The CPU 261 functions also as a setting unit that sets whether to perform auto-correction on the item values obtained by the item value extraction process.

The setting screen 1800 includes a table for setting auto-correction and candidate display. In a column 1801, correction units that output candidate character strings for correcting item values obtained by the item value extraction process are displayed. For example, the large language models selected on the large language model setting screen 1700 are displayed as correction units. Incidentally, the correction units may include correction rules each of which outputs a candidate character string(s) by performing a predetermined determination. Thus, in a case where there is a correction rule, it will be displayed as a correction unit in the column 1801.

A column 1802 holds the item names of the items to be subjected to auto-correction and/or candidate display.

A column 1803 holds "enabled" for each item held in the column 1802 for which the above-described auto-correction is to be enabled.

A column 1804 holds "enabled" for each item held in the column 1802 for which candidate display is to be enabled.

For example, the column 1802 in the table in the setting screen 1800 includes rows 1813 and 1814 holding "company name". The row 1813 is a row for setting how to output the reply from the large language model A. Auto-correction is enabled in the column 1803 in the row 1813. The row 1814 is a row for setting how to output the reply from the large language model B. Candidate display is enabled in the column 1804 in the row 1814. Thus, in Fig. 18, the settings are configured such that a character string returned from the large language model A will be output and displayed in the item value display region 1002 in the item value confirmation screen 1000 as the item value of the item "company name" by default. Also, the settings are configured such that the reply from the large language model B will be output to be displayed as candidates for corrected character strings.

### [Process of Obtaining Replies from Large Language Models]

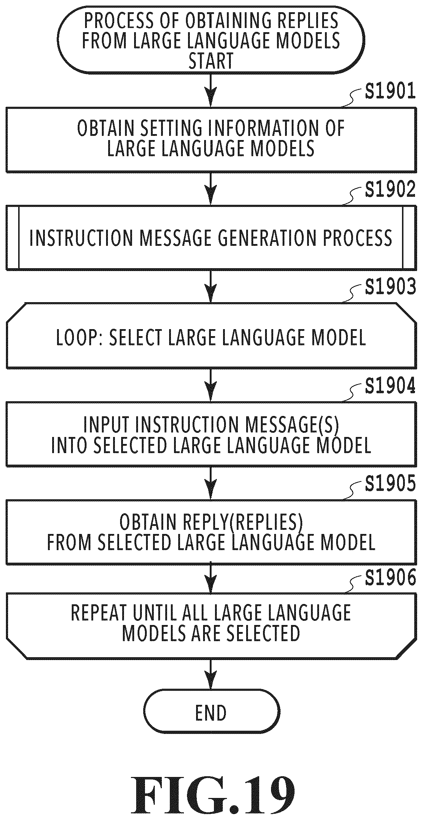

Fig. 19 is a flowchart describing details of a process of obtaining replies from the large language models. Fig. 19 is a flowchart according to the present embodiment corresponding to the flowchart of Fig. 8 in Embodiment 1. Fig. 19 is alternatively a flowchart according to the present embodiment corresponding to the flowchart of Fig. 12 in Embodiment 2.

In S1901, the CPU 261 obtains the setting information indicating the large language models selected by the user in S1611. For example, in the case where the user has selected "large language model A" and "large language model B" as input destinations in S1611, the CPU 261 obtains information indicating "large language model A" and "large language model B".

In S1902, the CPU 261 performs an instruction message generation process. For example, in a case of generating the instruction message 911 in Embodiment 1, the CPU 261 performs similar processes to S801 to S803 in Fig. 8. In a case of generating the instruction message 1410 in Embodiment 2, the CPU 261 performs similar processes to S1201 to S1204 in Fig. 12.

Subsequent S1903 to S1906 are a loop process. In S1903, the CPU 261 selects a processing target large language model from among the large language models represented by the setting information obtained in S1901. In S1906, the CPU 261 determines whether the process has been performed for all of the large language models indicated by the stetting information. If the process has not been performed for all of the large language models, the CPU 261 returns to S1903, and selects the next processing target from among the large language models for which the process has not yet been performed.

In S1904, the CPU 261 inputs the instruction message(s) generated in S1902 into the processing target large language model selected in S1903.

In S1905, the CPU 261 receives a reply(replies) to the instruction message(s) from the processing target large language model.

If the process has been completed for all of the large language models set by the user in S1906, the flowchart of Fig. 19 ends. For example, in the case where the user has selected "large language model A" and "large language model B" in S1611, the CPU 261 executes the processes of S1904 and S1905 on each of "large language model A" and "large language model B". That is, the CPU 261 performs the processes of S1904 and S1905 twice.

Then, in a case where the instruction messages 911 to 913 in Embodiment 1 have been generated, the CPU 261 proceeds to S503 in Figs. 5A and 5B. In a case where the instruction message 1410 in Embodiment 2 has been generated, the CPU 261 proceeds to S1104 in Fig. 11. In each of these steps, the CPU 261 performs a process of displaying the item value confirmation screen 1000.

### [Displaying Item Values]

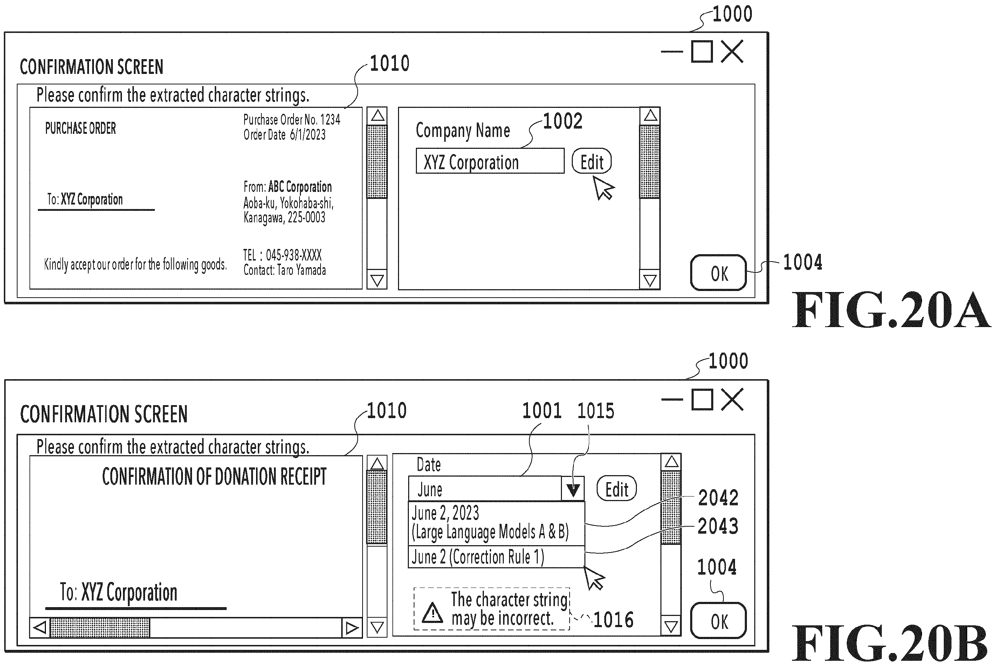

Figs. 20A and 20B are diagrams each illustrating the item value confirmation screen 1000 in the present embodiment, and the layout of the screen is similar to the item value confirmation screens 1000 in Figs. 10A to 10C. The CPU 261 transmits information for displaying the item value confirmation screen 1000 in Fig. 20A or 20B to the image forming apparatus 101 to display the item value confirmation screen 1000 in Fig. 20A or 20B.

Suppose, for example, that the item "company name" has been set to be automatically corrected with the reply from the large language model A. Suppose that the item value of "company name" obtained by the item value extraction process was "XY2 corporation", as in the description of Embodiment 1. Suppose also that the item value of "company name" returned from the large language model A was "XYZ corporation". In this case, as illustrated in the item value confirmation screen 1000 in Fig. 20A, "XYZ corporation", returned from the large language model A, is displayed by default in the item value display region 1002 in the item value confirmation screen 1000.

Incidentally, in a case where auto-correction has been enabled for multiple correction units and the character strings output from those multiple correction units match each other, auto-correction may be performed with the matched character string to display the matched character string in the item value display region 1002 by default. For example, suppose that auto-correction has also been enabled for the large language model B, and the item value of "company name" returned from the large language model B was "XYZ corporation" as well. In this case, "XYZ corporation", returned from the large language models A and B, may be displayed in the item value display region 1002 by default. In a case where the character strings output from the correction units do not match each other, they may be displayed as candidates, for example.

The item value confirmation screen 1000 in Fig. 20B is a diagram illustrating display of the item value of the item "date". Suppose, for example, that auto-correction has not been enabled for the item "date" and settings have been configured to display candidates based on outputs from the large language models A and B and the correction rule 1. Thus, "June", which is the item value obtained by the item value extraction process, is displayed by default in the item value display region 1001.

Suppose, for example, that "June 2, 2023" was then obtained as replies to the instruction message from the large language models A and B. Suppose also that "June 2" was obtained by the correction rule 1. In a case where different character strings are output from multiple correction units for which candidate display is enabled, a list of the output character strings may be displayed, and a correction may be made with a character string selected by the user from the list.

Examples of the method of displaying the list of candidates include one in which a drop-down list to display the item value candidates is displayed under the item value display region 1001, and the character strings output from the correction units are displayed in the drop-down list. The drop-down list may also include information indicating the large language model(s) and/or the correction rule(s) that output those character strings.

Text 2042 for displaying "June 2, 2023" in the drop-down list is written in a format in which "large language models A & B" representing the large language models A and B, which returned the character string, is attached to "June 2, 2023".

Also, a character string returned from a larger number of correction units may be displayed in a more prioritized manner. For example, two correction units, namely the large language models A and B, output "June 2, 2023". Only one correction unit, namely the correction unit 1, output "June 2". Accordingly, "June 2, 2023" is displayed at the top of the drop-down list to be displayed in a more prioritized manner.

As described above, in accordance with the present embodiment, it is possible to cause multiple large language models to return item values. This increases the possibility that an appropriate item value be returned. Moreover, in accordance with the present embodiment, item values obtained by the item value extraction process can be automatically corrected to item values returned from a large language model(s). This reduces the load of correcting the item values on the user.

### <Embodiment 4>

In Embodiment 2, a method of obtaining replies from the large language model 116 for items erroneously extracted or not extracted in the item value extraction process using the item value extractor 115 has been described. In Embodiment 4, a method of obtaining a reply for item values only from the large language model 116 will be described. In the present embodiment, its difference from Embodiment 2 will be mainly described. Features that are not particularly specified are the same components and processes as those in Embodiment 1.

### <Configuration of Information Processing System>

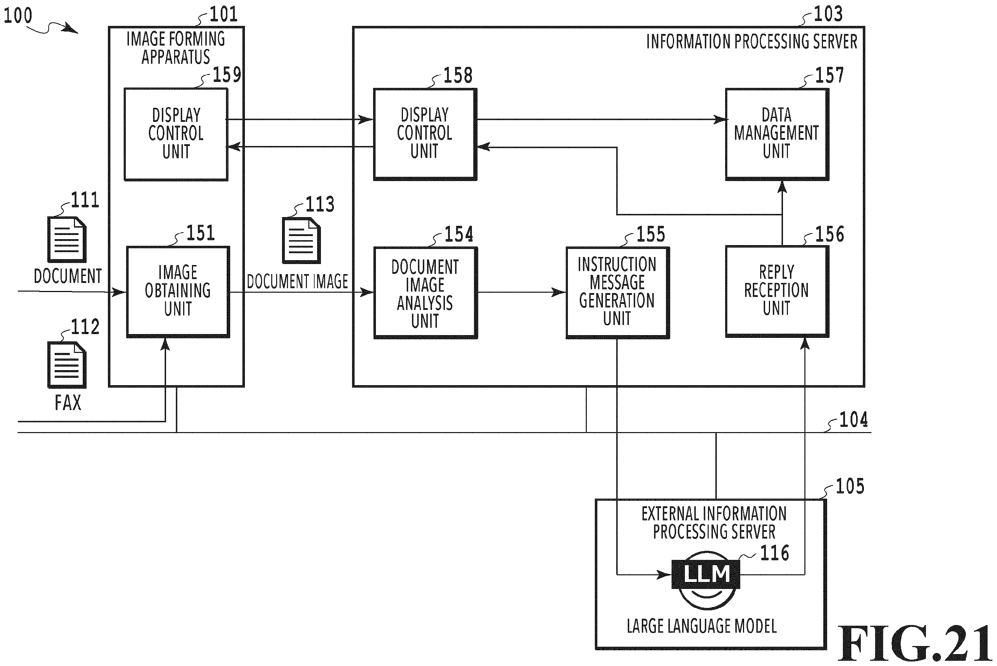

Fig. 21 is a diagram illustrating an example of a configuration of an information processing system in the present embodiment corresponding to Fig. 1. As illustrated in Fig. 21, the item value extractor 115 is not generated in the present embodiment. Accordingly, the information processing system 100 does not include the training apparatus 102.

### [Sequence of Item Value Extraction Process]

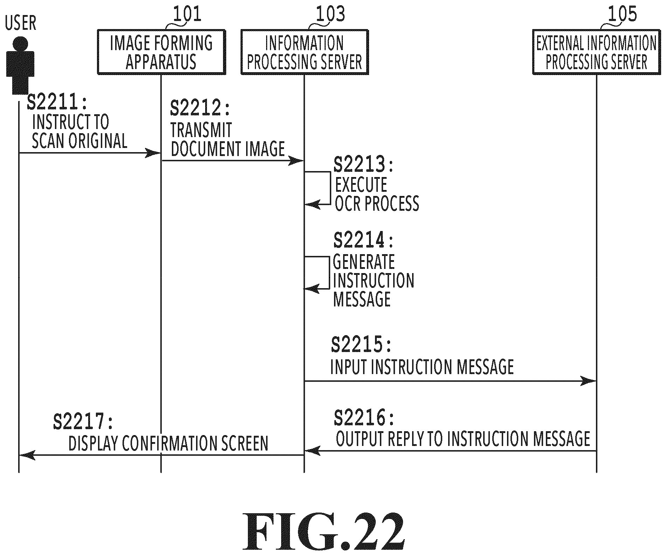

Fig. 22 is a sequence chart according to the present embodiment corresponding to the sequence in Fig. 3B. Since no machine learning model is used, there is no diagram in the present embodiment that corresponds to Fig. 3A. Note that S2211 to S2213 are similar processes to S311 to S313 and S2214 to S2217 are similar processes to S315 to S318. Since the item value extractor 115 is not generated in the present embodiment, the sequence does not include a step of extracting item values based on an output result from the item value extractor 115.

### [Item Value Display Process]

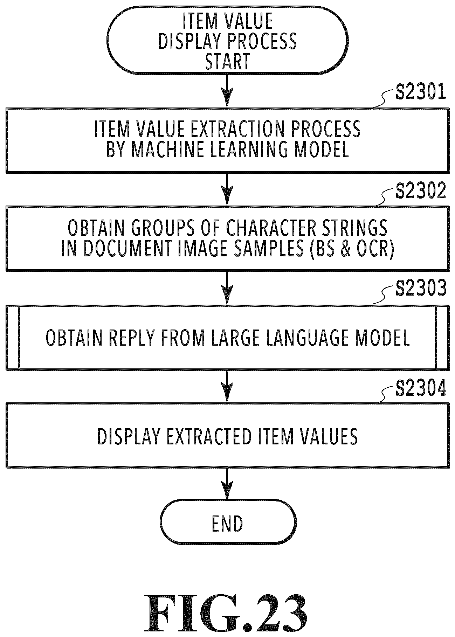

Fig. 23 is a flowchart for describing a process of extracting and displaying item values included in a document image, and is a flowchart according to the present embodiment corresponding to the flowchart of Fig. 11 in Embodiment 2.

In S2301, the CPU 261 obtains the document image transmitted from the image forming apparatus 101. The document image obtained in S2301 is a processing target document image.

In S2302, the CPU 261 executes a block selection (BS) process and an OCR process on the processing target document image to obtain a group of character strings recognized from the processing target document image.

In S2303, which is a step similar and corresponding to S1103 in Fig. 11, the CPU 261 generates an instruction message and obtains a reply to the instruction message from the large language model 116 as an output result. In S2303, similar processes to those in the flowchart of Fig. 12 are performed.

Note that, in the present embodiment, the CPU 261 obtains the item name of every extraction target item in S1201 in Fig. 12. Then, in S1204, the CPU 261 inserts the item names of the extraction target items obtained in S1201 to the item name region 1401 in the instruction message template 1400. For example, in a case where the extraction target items are "date", "company name", and "total amount", the CPU 261 inserts "date", "company name", and "total amount" into the item name region 1401 in the instruction message template 1400.

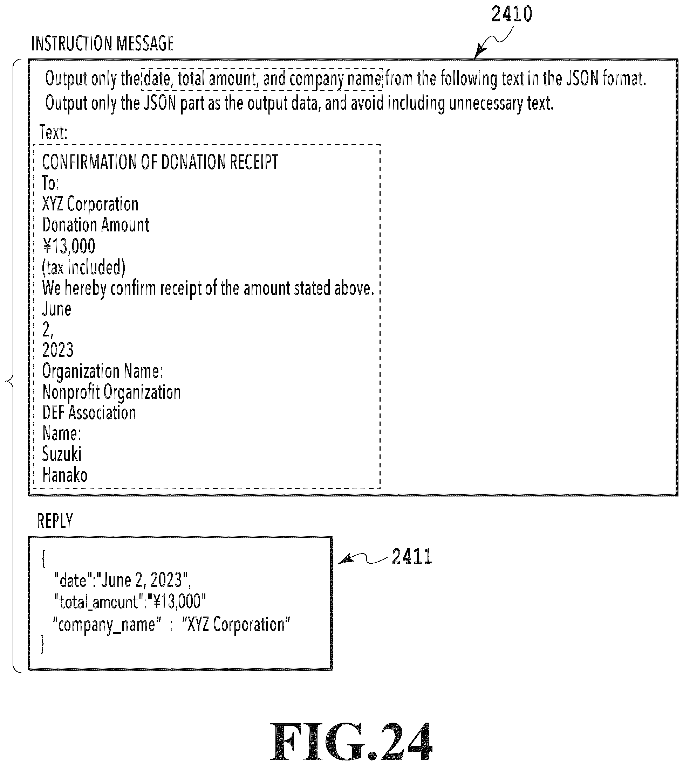

Fig. 24 is a diagram illustrating an example of the instruction message in the present embodiment. An instruction message 2410 in Fig. 24 includes an instruction to return item values of all extraction target items, unlike the instruction message 1410 in Embodiment 2. A reply 2411 to the instruction message 2410 from the large language model 116 includes "June 2, 2023" as the character string of the instruction message "date" and "¥13,000" as the character string of the item "total amount". Moreover, the reply 2411 indicates that "XYZ corporation" has been returned as the character string of the item "company name".

In S2304, the CPU 261 performs a process of notifying the process of the user of the item values included in the processing target document image that were returned from the large language model in S2303. In the present embodiment, the item values returned from the large language model 116 may be displayed in the item value display regions 1001 to 1003 in the item value confirmation screen 1000 by default.

As described above, in the present embodiment, the large language model 116 is caused to return item values included in a processing target document image. Thus, in accordance with the present embodiment, the load of generating a machine learning model is eliminated.

In accordance with the present disclosure, it is possible to reduce the load of obtaining character strings corresponding to predetermined items from a document image.

### <Other Embodiments>

Incidentally, the document type represented by a processing target document image may be determined, and an instruction message(s) to be replied to with an item value(s) may be generated with the determined document type taken into account.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An information processing apparatus comprising:
a character recognition unit configured to perform a character recognition process on an image of a processing target document (154);
a generation unit configured to generate an instruction message based on a result of the character recognition process, the instruction message being a message for causing a large language model to reply a first character string corresponding to a predetermined item which is included in the document (155);
a transmission unit configured to transmit the instruction message in order to obtain a reply to the instruction message from the large language model (155, S316); and
a reception unit configured to receive the reply to the instruction message from the large language model (156).

2. The information processing apparatus according to claim 1, further comprising
an extraction unit configured to extract a second character string corresponding to the predetermined item from among a group of character strings obtained by the character recognition process.

3. The information processing apparatus according to claim 2, wherein
the extraction unit extracts the second character string by inputting the group of character strings obtained by the character recognition process into a trained model.

4. The information processing apparatus according to claim 2 or 3, wherein
the generation unit generates the instruction message that includes the predetermined item and the second character string extracted by the extraction unit.

5. The information processing apparatus according to claim 4, wherein
the generation unit generates the instruction message for causing the large language model to reply whether the second character string extracted by the extraction unit contains an error.

6. The information processing apparatus according to claim 4 or 5, wherein
the generation unit generates the instruction message for causing the large language model to reply the first character string corresponding to the predetermined item as a correct character string in a case where the second character string includes a character misrecognized in the character recognition process.

7. The information processing apparatus according to claim 2, wherein
the extraction unit extracts item values representing character strings corresponding to extraction target items including the predetermined item from the group of character strings, and
the predetermined item is an item whose item value could not be obtained by the extraction unit among the extraction target items or an item for which an incorrect item value was extracted by the extraction unit among the extraction target items.

8. The information processing apparatus according to claim 2, wherein,
in a case where the extraction unit could not extract the second character string, the generation unit generates the instruction message for causing the large language model to reply the first character string corresponding to the predetermined item from among the group of character strings obtained by the character recognition process.

9. The information processing apparatus according to claim 1, wherein
the generated instruction message includes the predetermined item and a group of character strings obtained by the character recognition process.

10. The information processing apparatus according to claim 9, wherein
the generated instruction message is a message for causing the large language model to reply the first character string corresponding to the predetermined item from among the group of character strings obtained by the character recognition process.

11. The information processing apparatus according to any one of claims 2 to 8, further comprising
a display control unit configured to display, on a display unit, at least one of the second character string extracted by the extraction unit or the first character string received as the reply from the large language model.

12. The information processing apparatus according to claim 11, wherein
the display control unit displays a difference between the second character string extracted by the extraction unit and the first character string received from the large language model in such a manner as to exaggerate the difference.

13. The information processing apparatus according to any one of claims 1 to 12, further comprising
a setting unit configured to set a plurality of large language models to be caused to reply to the instruction message, wherein
the transmission unit transmits the instruction message to the set plurality of large language models.

14. The information processing apparatus according to any one of claims 2 to 8, further comprising
a plurality of correction units each configured to output a candidate character string for correcting the second character string extracted by the extraction unit, wherein
at least one of the plurality of correction units outputs the first character string obtained from the large language model.

15. The information processing apparatus according to claim 14, further comprising
a display control unit configured to, in a case where the candidate character strings output by the plurality of correction units match each other, display the matched character string as the character string corresponding to the predetermined item on a display unit.

16. The information processing apparatus according to claim 14, further comprising
a display control unit configured to display the candidate character strings output by the plurality of correction units in list form on a display unit.

17. The information processing apparatus according to claim 14, further comprising
a display control unit configured to preferentially display a matched character string on a display unit among the candidate character strings output by the plurality of correction units.

18. The information processing apparatus according to any one of claims 2 to 8, further comprising
a setting unit configured to set whether to replace the second character string extracted by the extraction unit with the first character string received from the large language model and to output the replaced character string.

19. An information processing method comprising:
performing a character recognition process on an image of a processing target document (S313);
generating an instruction message based on a result of the character recognition process, the instruction message being a message for causing a large language model to reply a first character string corresponding to a predetermined item which is included in the document (S315);
transmitting the instruction message in order to obtain a reply to the instruction message from the large language model (S316); and
receiving the reply to the instruction message from the large language model (S317).

20. A program for causing a computer to execute each units of the information processing apparatus according to any one of the claims 1 to 18.
